(19) Europäisches Patentamt / European Patent Office / Office européen des brevets

(11) **EP 3 759 393 B1**

(12) **EUROPÄISCHE PATENTSCHRIFT**

(45) Veröffentlichungstag und Bekanntmachung des Hinweises auf die Patenterteilung:
**30.03.2022 Patentblatt 2022/13**

(21) Anmeldenummer: **19709640.7**

(22) Anmeldetag: **26.02.2019**

(51) Internationale Patentklassifikation (IPC):
**F23R 3/00** (2006.01)    **G05B 17/02** (2006.01)
**G01M 15/14** (2006.01)

(52) Gemeinsame Patentklassifikation (CPC):
**F23R 3/00; G05B 17/02;** F23N 2223/40;
F23N 2227/12; F23R 2900/00013;
F23R 2900/00014

(86) Internationale Anmeldenummer:
**PCT/EP2019/054668**

(87) Internationale Veröffentlichungsnummer:
**WO 2019/166400 (06.09.2019 Gazette 2019/36)**

(54) **VERFAHREN ZUR MINIMIERUNG THERMOAKUSTISCHER INSTABILITÄTEN EINER GASTURBINE**

METHOD FOR MINIMIZING THERMOACOUSTIC INSTABILITIES OF A GAS TURBINE

PROCÉDÉ SERVANT À MINIMISER DES INSTABILITÉS THERMOACOUSTIQUES D'UNE TURBINE À GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2018 IN 201841007455**

(43) Veröffentlichungstag der Anmeldung:
**06.01.2021 Patentblatt 2021/01**

(73) Patentinhaber:
• **Potsdam-Institut für Klimafolgenforschung E.V.**
**14473 Potsdam (DE)**
• **Indian Institute Of Technology Madras (IIT Madras)**
**Chennai 600036 (IN)**

(72) Erfinder:
• **MARWAN, Norbert**
**14469 Potsdam (DE)**
• **KURTHS, Jürgen**
**14532 Stahnsdorf (DE)**
• **UNNI, Vishnu R.**
**Chennai, Tamil Nadu 600042 (IN)**
• **RAMANPILLAI INDUSEKHARAN NAIR, Sujith**
**Chennai, Tamil Nadu 600036 (IN)**
• **KRISHNAN, Abin**
**Chennai, Tamil Nadu 600036 (IN)**

(74) Vertreter: **Hertin und Partner**
**Rechts- und Patentanwälte PartG mbB**
**Kurfürstendamm 54/55**
**10707 Berlin (DE)**

(56) Entgegenhaltungen:
WO-A1-2010/036285    CN-B- 103 389 213
US-A1- 2015 260 611    US-A1- 2017 051 683

**Beschreibung**

Die Erfindung betrifft ein computerimplementiertes Verfahren für eine Minimierung von aeroakustischen, aeroelastischen und/oder thermoakustischen Instabilitätszuständen eines Verbrennungsvorgangs in einer Gasturbine, wobei die Gasturbine ein Verbrennungsvolumen umfassend ein Fluid aufweist, wobei die Schritte des Verfahrens folgendes umfassen: Erzeugung einer digitalen Abbildung des Verbrennungsvolumens in Form eines Gitters durch räumliche Aufteilung des Verbrennungsvolumens in Volumenbereiche und digitale Abbildung dieser Volumenbereiche durch Gitterzellen; Erzeugung einer Zeitreihe mindestens einer Zustandsvariablen des pro Volumenbereich umfassten Fluides während eines Verbrennungsvorgangs, durch digitale Simulation des Verbrennungsvorgangs und/oder Messung der Zustandsvariablen während des Verbrennungsvorgangs durch mindestens einen Sensor; Zuordnung der Zeitreihe zur jeweiligen Gitterzelle; Bildung eines räumlichen und/oder zeitlichen Netzwerks, indem jede Gitterzelle durch einen Knoten repräsentiert wird und bezüglich der Zeitreihen korrelierte Paare von Knoten durch einen Link verbunden werden; Durchführung einer Netzwerkanalyse zu einer Bestimmung von mindestens einem statistischen Netzwerkmaß des Netzwerks, Durchführung einer Analyse des Netzwerkmaßes, wobei die Analyse des Netzwerkmaßes konfiguriert ist für eine Minimierung von thermoakustischen Instabilitätszuständen eines Verbrennungsvorgangs durch eine kontrollierte Störung des Verbrennungsvorgangs durch mindestens ein Kontrollelement.
Des Weiteren betrifft die Erfindung eine Vorrichtung zur Durchführung des Verfahrens.

Hintergrund und Stand der Technik

Gasturbinen finden vielfältige Verwendung. Am bekanntesten ist dabei die Erzeugung von Antriebsenergie für Luftfahrzeuge durch eine Gasturbine. Aber auch zur Energieerzeugung können Gasturbinen verwendet werden.
Die komplexen Verbrennungsprozesse in Gasturbinen können periodisch auftretende Störungen verursachen. Diese Störungen sind von thermoakustischer Natur, d. h., durch die thermischen Prozesse während des Verbrennungsprozesses entstehen akustische Wellen. Diese Wellen können gefährlich große Amplituden erreichen und im Extremfall zu einer Beschädigung der Gasturbine führen, insbesondere im Resonanzfall. Dies ist ein verbreitetes Problem, das z. B. regelmäßig zu Ausfällen im wirtschaftlichen Betrieb der Stromerzeugung führt, wie 2005 bei Calpine Corp. in der USA durch den Ausfall von Siemens-Gasturbinen. Es ist klar, dass im sicherheitssensiblen Luftfahrtbereich solche Instabilitäten ebenfalls unbedingt zu vermeiden sind. Das Problem ist ebenso bekannt bei Triebwerken für Raketen - als prominentestes Beispiel sei hier das F-1-Triebwerk der Saturn-Mondrakete genannt, für das über 2000 Test nötig waren, um eine Lösung zur Beherrschung der thermoakustischen Instabilitäten zu finden. Um das Problem zu beherrschen sind i. d. R. viele Versuche nach dem "trial and error"-Verfahren nötig. Unter Umständen müssen bei bereits entwickelten Gasturbinen konstruktive Änderungen im Nachhinein angewendet werden oder aber die Turbinen werden mit geringerer Leistung gefahren.
Vielversprechend sind Verfahren, die den Brennstoff schrittweise einspritzen oder die Nutzung von sogenannten "micro jets", kleinen Vorrichtungen zum Einspritzen von Luft, um den Verbrennungszustand lokal zu stören und Instabilitäten zu unterbinden. Dabei stellen sich jedoch mehrere Probleme: zum einen muss eine geeignete Region gefunden werden, in der die Störung am effektivsten ist, ohne jedoch die Gesamtleistung der Turbine nennenswert zu beeinflussen. Zum anderen ist für eine effiziente Kontrolle wünschenswert, eine gezielte Störung nur vorzunehmen, wenn eine Instabilität tatsächlich einsetzt oder aber bevorsteht.
Dokumente US2017/051683 A1 und WO2010/036285 A1 beschreiben computerimplementierte Verfahren für die Minimierung von Instabilitätszuständen eines Verbrennungsvorgangs in einer Gasturbine.

Aufgabe der Erfindung

Eine Aufgabe der Erfindung ist es, ein Verfahren und eine Vorrichtung für einen Minimierung von thermoakustischen, aeroakustischen und/oder aeroelastischen Instabilitäten einer Gasturbine ohne die Nachteile des Standes der Technik bereitzustellen. Insbesondere war es Aufgabe der Erfindung, ein Verfahren und eine Vorrichtung zur Minimierung von thermoakustischen, aeroakustischen und/oder aeroelastischen Instabilitäten bereitzustellen, welches thermoakustische, aeroakustische und/oder aeroelastische Instabilitäten effizient minimiert und sowohl eine aktive als auch eine passive Regelung zur Minimierung ermöglicht und ohne eine Vielzahl von Versuchen (nach dem "trial-and-error" Prinzip) auskommt.

Zusammenfassung der Erfindung

Gelöst wird die Aufgabe durch die Merkmale der unabhängigen Ansprüche. Vorteilhafte Ausgestaltungen der Erfindung sind in den abhängigen Ansprüchen beschrieben.
In einem Aspekt betrifft die Erfindung ein computerimplementiertes Verfahren für eine Minimierung von thermoakustischen, aeroakustischen und/oder aeroelastischen Instabilitätszuständen eines Verbrennungsvorgangs in einer Gasturbine, wobei die Gasturbine ein Verbrennungsvolumen umfassend ein Fluid aufweist, wobei die folgenden Schritte umfasst sind:

- Erzeugung einer digitalen Abbildung des Verbrennungsvolumens in Form eines Gitters durch räumliche Aufteilung des Verbrennungsvolumens in Volumenbereiche und digitale Abbildung dieser Volumenbereiche durch Gitterzellen;
- Erzeugung einer Zeitreihe mindestens einer Zustandsvariablen des pro Volumenbereich umfassten Fluides während eines Verbrennungsvorgangs, durch digitale Simulation des Verbrennungsvorgangs und/oder Messung der Zustandsvariablen während des Verbrennungsvorgangs durch mindestens einen Sensor
- Zuordnung der Zeitreihe zur jeweiligen Gitterzelle ;
- Bildung eines räumlichen und/oder zeitlichen Netzwerks, indem jede Gitterzelle durch einen Knoten repräsentiert wird und bezüglich der Zeitreihen korrelierte Paare von Knoten durch einen Link verbunden werden;
- Durchführung einer Netzwerkanalyse zu einer Bestimmung von mindestens einem statistischen Netzwerkmaß des Netzwerks,
- Durchführung einer Analyse des Netzwerkmaßes

wobei die Analyse des Netzwerkmaßes konfiguriert ist für eine Minimierung von thermoakustischen, aeroakustischen und/oder aeroelastischen Instabilitätszuständen eines Verbrennungsvorgangs durch eine kontrollierte Störung des Verbrennungsvorgangs durch mindestens ein Kontrollelement.

Computerimplementiertes Verfahren bedeutet insbesondere, dass es sich um ein technisches Verfahren handelt, zu deren Realisierung ein Computer, ein Computerprogramm und/oder ein Netzwerk von Computern verwendet werden, um Steuerungsprozesse, Auswertungsprozesse und/oder Simulationen vorzunehmen, die für die Realisierung des Verfahrens benötigt werden. Das Verfahren selber erzeugt dabei bevorzugt technische Wirkungen von realen technischen Vorrichtungen, nämlich insbesondere die Minimierung von thermoakustischen Instabilitäten von Gasturbinen.

Dem Fachmann ist bekannt, dass es bei Verbrennungsvorgängen in einer Gasturbine durch die Erhitzung und Abkühlung eines Fluides im Bereich der Gasturbine zu thermischen Expansion bzw. Komprimierung des Fluides kommen kann. Dadurch können Schallwellen in diesem Bereich produziert werden, welche mechanische Kräfte auf die Komponenten der Gasturbine ausüben können. Kommt es insbesondere zu periodisch auftretenden Prozessen, die Schallwellen mit Frequenzen im Bereich der Resonanzfrequenz von Komponenten der Gasturbine aufweisen und/oder zu großen Amplituden der Schwingungen führen, kann es zu gefährlichen mechanischen Schwingungen kommen, welche die Stabilität und Funktionalität der Gasturbine bedrohen. Eine solche Situation soll bevorzugt als thermoakustischer Instabilitätszustand eines Verbrennungsvorgangs bezeichnet werden und ist aufgrund der potentiell zerstörerischen und leistungsmindernden Wirkung auf die Gasturbine unbedingt zu vermeiden bzw. zu minimieren. Minimierung meint dabei bevorzugt Vermeidung, mindestens jedoch wesentliche Abschwächung von thermoakustischen Instabilitätszuständen. Insbesondere ist damit gemeint, einen Verbrennungszustand der thermoakustischen Instabilität in einen Zustand des Verbrennungsrauschens oder mindestens der Intermittenz zu überführen, bevorzugt in kürzester Zeit. Dies bezieht sich insbesondere auf eine aktive Regelung. Insbesondere im Kontext einer passiven Regelung kann jedoch auch gemeint sein, die Wahrscheinlichkeit des Auftretens einer thermoakustische Instabilität während des Betriebs der Gasturbine insgesamt wesentlich zu verringern. Z. B. kann eine Minderung der Wahrscheinlichkeit des Auftretens um einen Faktor 2, 3, 5, 7, 10, 20, 50 und/oder 100 gemeint sein. Es kann ebenso bevorzugt gemeint sein, eine absolute Obergrenze der Wahrscheinlichkeit des Auftretens unterhalb 10 %, 5 %, 2 %, 1%, 0,5 %, 0,1 %, 0,05 %, 0, 01%, 0,001 % und/oder 0,0001 % zu erzielen. Die Verwendung des Plurals bei den "Instabilitätszuständen" ist bevorzugt synonym zur Verwendung des Singulars Instabilitätszustand. Es kann vorzugsweise ebenso gemeint sein, dass der Plural mehrere solcher Zustände in einer kurzen zeitlichen Abfolge bezeichnet.

Auch aeroakustische Instabilitäten sind dem Fachmann bekannt. Diese beruhen bevorzugt auf aeroakustischen Schwingungen, also vorzugsweise ebenfalls Schallwellen, welche mechanische Kräfte auf die Komponenten der Gasturbine ausüben können. Kommt es insbesondere zu periodisch auftretenden Prozessen, die Schallwellen mit Frequenzen im Bereich der Resonanzfrequenz von Komponenten der Gasturbine aufweisen und/oder zu großen Amplituden der Schwingungen führen, können diese mechanischen Schwingungen ein gefährliches Ausmaß annehmen, welche die Stabilität und Funktionalität der Gasturbine bedrohen. Dann spricht man vorzugsweise von aeroakustischen Instabilitäten bzw. Instabilitätszuständen. Aeroakustische Schwingungen werden vorzugsweise durch aerodynamisch erzeugte Schwingungen hervorgerufen. Dabei können im Bereich der Gasturbinen aerodynamische Schwingungen ebenfalls durch die bei einem Verbrennungsvorgang beteiligten Fluide hervorgerufen werden. Bekannt sind dabei vorzugsweise folgende Entstehungsmechanismen aeroakustischer Schwingungen: Volumenströme von Fluiden durch relativ kleine Öffnungen, Wechseldruckbeaufschlagung vorzugsweise strömender Fluide auf festen Oberflächen und/oder turbulente Schubspannungen, vorzugsweise ausgelöst durch strömende Fluide.

Ebenfalls sind dem Fachmann aeroelastische Schwingungen bekannt. Aeroelastizität bezeichnet dabei vorzugsweise physikalische Vorgänge an von Fluiden umströmten Strukturen. Insbesondere wird darunter die Wechselwirkung bzw. Übertragung von aerodynamischen, bevorzugt durch strömende Fluide verursachte Lasten und/oder Kräfte auf eine elastische Struktur verstanden. Insbesondere verformen die Fluidkräfte dabei den Festkörper/die Struktur und/oder regen ihn zum Schwingen an. Auch diese Schwingungen können in Bezug auf Amplitude und/oder Frequenz für die strukturelle Verfasstheit des betroffenen Körpers gefährlich werden, insbesondere bei Schwingungen im Bereich geringer Eigendämpfung des Körpers, bevorzugt im Bereich der Resonanzfrequenz. Dann sprich man bevorzugt von aeroelastischen Instabilitäten. Auch aeroelastische Schwingungen/Instabilitäten können vorzugsweise durch mindestens ein bei einer Verbrennung beteiligtes Fluid verursacht werden.

Bevorzugt werden aeroakustische und/oder aeroelastische Instabilitäten analog zu bzw. genauso wie thermoakustischen Instabilitäten behandelt/minimiert.

Eine Gasturbine umfasst bevorzugt mindestens ein Verbrennungsvolumen, in dem die vorzugsweise zum Betrieb der Gasturbine benötigte Verbrennung stattfindet. Daher ist das Verbrennungsvolumen bevorzugt synonym mit der Brennkammer. Bevorzugt bezeichnet das Verbrennungsvolumen ein abgeschlossenes Volumen. Bevorzugt ist das Verbrennungsvolumen der Volumenbereich, in dem thermoakustische Instabilitätszustände auftreten können. Das Verbrennungsvolumen umfasst bevorzugt ein Fluid, umfassend bevorzugt den mindestens einen Brennstoff sowie vorzugsweise weiterhin den zu Verbrennung vorzugsweise benötigten Sauerstoff und/oder die vorzugsweise benötigte Luft. Insbesondere liegen der Brennstoff und der Sauerstoff und/oder die Luft in einem Gemisch innerhalb des Verbrennungsvolumens vor. Der Brennstoff bzw. Treibstoff ist beispielsweise ein Gas-, Flüssiggas- und Flüssigtreibstoff, insbesondere Erd- und Synthesegas, Deponiegas, Biogas, Kerosin, Heizöl, Dieselkraftstoff, Gasöl und/oder Schweröl. Es kann sich neben festen und/oder gasförmigen Brennstoffen bevorzugt ebenfalls um staub- und/oder feststoffartige Brennstoffe handeln, wie z. B. Kohlenstaub. Gasförmige Brennstoffe können insbesondere Methan, Ethan, Propan und/oder Butan umfassen. Flüssige Brennstoffe können bevorzugt auch Rapsöl und/oder ein hydriertes Pflanzenöl umfassend ein Öl ausgesucht aus der Gruppe umfassend Leinöl, Sonnenblumenöl, Baumwollsaatöl und/oder Rapsöl umfassen. Der Aggregatzustand, insbesondere "fest", "flüssig" und/oder "gasförmig" des Brennstoffes bzw. des Fluides können insbesondere von physikalischen Eigenschaften des Fluides und/oder seiner Umgebung abhängen, vor allem von Druck und/oder Temperatur.

Das computerimplementierte Verfahren umfasst mehrere Schritte. Ein erster Schritt umfasst die Erzeugung einer digitalen Abbildung des Verbrennungsvolumens in Form eines Gitters durch räumliche Aufteilung des Verbrennungsvolumens in Volumenbereiche und digitale Abbildung dieser Volumenbereiche durch Gitterzellen. Hierbei wird bevorzugt erst einmal eine Unterteilung des Verbrennungsvolumens in kleinere Volumenbereiche vorgenommen. Diese können bevorzugt mindestens zweidimensional sein und insbesondere dreidimensional sein und werden je nach Problemstellung nach z. B. geometrischen Überlegungen, Symmetrieüberlegungen und/oder physikalischen Überlegungen gewählt. Dabei können die Volumenbereiche bevorzugt eine der Problemstellung optimal angepasste Formgebung aufweisen, z. B. Dreiecke, Parallelogramme, krummlinige Dreiecke oder Vierecke bzw. Tetraederelemente, Quaderelemente, Würfel und/oder krummflächig berandete Elemente sein. Auch die Größe der Bereiche kann bevorzugt dem jeweiligen Problem angepasst werden und stellt beispielsweise einen Kompromiss zwischen der Genauigkeit einer durchzuführenden Berechnung und den benötigten Rechenaufwand dar. Bevorzugt wird das gesamte Verbrennungsvolumen in einander nicht überschneidende Volumenbereiche aufgeteilt. Ziel dieser Zerlegung ist bevorzugt die Diskretisierung des Verbrennungsvolumens durch Zerlegung in eine endliche Anzahl von Volumenbereichen und die Erstellung einer computerimplementierten digitalen Abbildung des Verbrennungsvolumens durch eine digitale Abbildung der Volumenbereiche. Diese digitale Abbildung wird bevorzugt für Berechnungen, Auswertungen und/oder Simulationen den Verbrennungsvorgang betreffend verwendet. Die digitalen Abbildungen der Volumenbereiche werden durch sogenannte Gitterzellen repräsentiert, welche wiederum in Ihrer Gesamtheit das Gitter ergeben, welches bevorzugt das gesamte Verbrennungsvolumen in digitaler Form repräsentiert. Digitale Abbildung bedeutet bevorzugt nicht zwangsläufig, dass es eine tatsächlich darstellbare und optische erfassbare "Abbildung", z. B. auf einem Bildschirm gibt, sondern dass es digitale Repräsentanten der Volumenbereiche in Form von Gitterzellen gibt, welche in digitalen Speichern, Prozessoren und/oder Netzwerken gespeichert und bearbeitet werden können, bevorzugt zum Zwecke von computerimplementierten Berechnungen den Verbrennungsvorgang betreffend. Bevorzugt können diese aber auch auf einer Abbildungseinrichtung, z. B. einem Bildschirm, tatsächlich abgebildet werden, wobei zusätzliche Informationen, wie bspw. physikalische Eigenschaften bevorzugt ebenfalls dargestellt werden können.

In einem nächsten Schritt geht es um die Erzeugung einer Zeitreihe mindestens einer Zustandsvariablen des pro Volumenbereich umfassten Fluides während eines Verbrennungsvorgangs, durch digitale Simulation des Verbrennungsvorgangs und/oder Messung der Zustandsvariablen während des Verbrennungsvorgangs durch mindestens einen Sensor. Der Verbrennungsvorgang kann bevorzugt durch physikalische Eigenschaften des umfassten Fluides beschrieben werden, z. B. durch die Temperatur an jedem Punkt des Volumens, bevorzugt durch ein Feld der jeweiligen Eigenschaften. Die vorherrschende Fluidmechanik währen des Verbrennungsvorgangs wird bevorzugt durch ein Strömungsfeld und/oder ein Geschwindigkeitsfeld beschrieben. In diesem Dokument kann bevorzugt auch ein Geschwindigkeitsfeld umfasst bzw. gemeint sein, wenn der Begriff "Strömungsfeld" verwendet wird. Durch Diskretisierung des Volumens in Form von Volumenbereichen können bevorzugt den physikalischen Eigenschaften eine endliche Zahl von Zustandsvariablen zugeschrieben werden, welche jeweils einem Volumenbereich zugeordnet werden. Diese Zuordnung kann aus den tatsächlichen physikalischen Eigenschaften bspw. mit Hilfe von statistischen Auswertungen gewonnen werden, als einfaches Beispiel kann aus der Menge der Werte einer physikalischen Eigenschaft an verschiedenen Punkten bevorzugt des Volumenbereichs ein Mittelwert gebildet werden und der Zustandsvariablen des Volumenbereichs zugeordnet werden. Die Zustandsvariable wiederum wird der jeweiligen digitalen Gitterzelle zugeordnet. Somit können die physikalischen Eigenschaften des Fluides im Verbrennungsvolumen im "digitalen Raum" durch die Gitterzellen und den jeweiligen Zustandsvariablen zugeordnet werden. Dabei können pro Gitterzelle selbstverständlich bevorzugt mehrere Zustandsvariablen, welche verschiedene physikalische Eigenschaften beschreiben, zugeordnet sein. Bspw. kann neben der Temperatur die Fluidgeschwindigkeit durch eine weitere Zustandsvariable pro Gitterzelle umfasst sein. Somit werden die physikalischen Eigenschaften des Volumenbereichs bevorzugt diskretisiert. Bevorzugt wird ein Verbrennungsvorgang nicht nur durch die physikalischen Eigenschaften zu einem einzigen Zeitpunkt beschrieben, sondern durch physikalischen Eigenschaften zu mehreren Zeitpunkten, insbesondere zu jedem Zeitpunkt während des Verbrennungsvorgangs. Dabei wird bevorzugt ebenfalls eine Diskretisierung der Zeit vorgenommen, in der der Vorgang von Interesse abläuft. Dies kann in Form einer Zeitreihe geschehen, wobei die Zeit durch Zeitpunkte mit festen zeitlichen Abständen unterteilt wird. Die physikalische Eigenschaft wird dann nur zum jeweiligen Zeitpunkt betrachtet. Diese Betrachtung kann ebenfalls bevorzugt eine zeitliche Mittelung darstellen. Durch chronologische Auflistung der physikalischen Eigenschaft zum jeweiligen Zeitpunkt wird so die physikalische Eigenschaft im Zeitverlauf durch die daraus resultierende Zeitreihe dargestellt. Diese Zeitreihe kann ebenfalls durch eine Zeitreihendarstellung der Zustandsvariablen der jeweiligen Gitterzelle in die digitale Repräsentation des Verbrennungsvolumens überführt werden, womit bevorzugt der Verbrennungsvorgang selber digital repräsentiert werden kann. Die Zeitreihe ist dabei bevorzugt endlich und umfasst insbesondere so viele Zeitpunkte wie für die effiziente Berechnung der jeweilig interessanten Größe angemessen. Dabei kann die Zuordnung bevorzugt auf einer Messung eines Verbrennungsvorgangs in einer Gasturbine erfolgen. Dabei kommt bevorzugt mindestens ein Messsensor zum Einsatz, zur Messung einer Temperatur kann es sich dabei z. B. um mindestens einen Temperatursensor handeln. Je nach gemessener physikalischer Eigenschaft und verwendeter Messmethode kann dabei ein Messsensor die jeweilige Größe lokal in einem kleinen Bereich um den Sensor herum erfassen oder aber für einen größeren Teil bzw. im Wesentlichen das gesamte Verbrennungsvolumen. Bevorzugt sollte für jeden Volumenbereich des Verbrennungsvolumens mindestens ein repräsentativer Messwert pro Zeitpunkt der physikalischen Eigenschaft vorliegen, um diesen der Zustandsvariablen zuordnen zu können. Daher kann es bspw. bevorzugt sein, für die Messung mindestens einer physikalischen Eigenschaft des Verbrennungsvolumens einen einzigen Sensor zu verwenden, wenn somit die Eigenschaften an verschiedenen Punkten des Volumens erfasst werden können. Es kann ebenso bevorzugt sein, dass pro Volumenbereich mindestens ein Sensor zum Einsatz kommt, damit jeder jeweiligen Gitterzelle mindestens eine Zustandsvariable zugeordnet werden kann, welche durch die Messung bestimmt wird. Bevorzugt wird dabei bereits durch den Sensor eine Mittelung der physikalischen Eigenschaften von Punkten innerhalb des Volumenbereichs vorgenommen, da der Sensor eine Messung innerhalb eines endlichen räumlichen Bereichs vornimmt.

Es kann ebenso bevorzugt sein, dass die Zustandsvariable durch eine digitale Simulation des Verbrennungsvorgangs berechnet wird. Insbesondere innerhalb des Entwicklungsstadiums einer Gasturbine ist es vorteilhaft, den Verbrennungsvorgang zu simulieren und so zu weiteren Erkenntnissen zu gelangen, beispielsweise über die Gefahr von thermoakustischen Instabilitätszuständen. Durch eine fachmännische Simulation können präzise Erkenntnisse über einen realen Verbrennungsvorgang, welcher bevorzugt durch den zeitlichen Verlauf von physikalischen Eigenschaften des im Verbrennungsvolumen umfassten Fluids dargestellt wird, gewonnen werden. Eine Simulation kann vorteilhafterweise ebenfalls dadurch durchgeführt werden, dass in einem ersten Schritt die Erzeugung einer digitalen Abbildung des Verbrennungsvolumens in Form eines Gitters durch räumliche Aufteilung des Verbrennungsvolumens in Volumenbereiche und digitale Abbildung dieser Volumenbereiche durch Gitterzellen vorgenommen wird. Die Erzeugung einer Zeitreihe mindestens einer Zustandsvariablen des pro Volumenbereich umfassten Fluides während eines Verbrennungsvorgangs wird dann bevorzugt durch numerische Verfahren je nach zu berechnender Größe und unter Berücksichtigung der relevanten physikalischen Gesetzmäßigkeiten vorgenommen, beispielsweise von Navier-Stokes Gleichungen zur Strömung von Fluiden, Modellen zu turbulenten Strömungen und zur chemischen Kinetik. Bevorzugt ist eine solche numerische Simulation unter Diskretisierung des zu berechnenden räumlichen Volumens und/oder der Zeit durch eine Zeitreihe auch als Finite-Elemente-Methode bekannt. Es können aber auch andere Simulationsmethoden zum Einsatz kommen. Ein Fachmann weiß, welche Simulationsmethode, bspw. je nach zu berücksichtigender Zustandsvariable geeignet ist und wie er diese vornehmen muss.

In einem nächsten Schritt wird die Bildung eines räumlichen und/oder zeitlichen Netzwerks vorgenommen, indem jede Gitterzelle durch einen Knoten repräsentiert wird und bezüglich der Zeitreihen korrelierte Paare von Knoten durch einen Link verbunden werden. Bevorzugt ist die Korrelation eine Quantifizierung des Zusammenhangs zweier Größen, hier insbesondere die Zeitreihen von Zustandsvariablen verschiedener Gitterzellen. Dabei können bevorzugt sowohl einzelne Zustandsvariablen zu einzelnen Zeitpunkten betrachtet werden als auch die gesamte Zeitreihe. Es können bevorzugt sowohl absolute Werte als auch Änderungsraten von Zustandsvariablen betrachtet werden. Insbesondere bedeutet Korrelation, dass ein etwaiger Zusammenhang nicht nur quantifiziert wird, wobei die Quantifizierung auch das Fehlen eines Zusammenhangs zum Ausdruck bringen kann, sondern vor allem, dass ein Zusammenhang tatsächlich besteht. Dies kann durch Überschreiten eines Schwellwerts bestimmt werden, wenn z. B. die Korrelation anhand einer dimensionslosen Zahl ausgedrückt wird. Eine Korrelation kann bevorzugt nicht nur die Stärke, sondern auch die Richtung eines Zusammenhangs ausdrücken, das bedeutet insbesondere, ob sich z. B. der Zusammenhang zweier Größen gleichläufig und/oder gegenläufig ist (bevorzugt auch Antikorrelation genannt). Beispiele für eine Bestimmung der Korrelation zwischen zwei Zustandsvariablen ist der Korrelationskoeffizient nach Pearson, durch ein Korrelationsintegral und/oder die Transinformation aus der Informationstheorie (engl. *"mutual information"*). Bezüglich der Zeitreihen korrelierte Paare von Knoten (bevorzugt einfach der Repräsentant einer Gitterzelle, welcher sich bevorzugt besonders gut für die folgend beschriebene Netzwerkanalyse eignet) werden durch einen Link verbunden. Das so entstehende Ensemble von miteinander durch Links in Verbindung stehende Knoten kann sowohl bildlich gesprochen verstanden und auch dementsprechend grafisch für mindestens einen Auswertungszeitpunkt abgebildet werden, wobei bevorzugt der Begriff Netzwerk für das abgebildete Ensemble beschreibend ist, es ist aber ebenso bevorzugt abstrakt zu verstehen, wobei das computerimplementierte Verfahren korrelierte, durch Knoten repräsentierte Gitterzellen kennzeichnet, in dem es Ihnen einen Link zuordnet. Die Korrelation der Zeitreihen verschiedener Gitterpunkte kann dabei bevorzugt räumlich sein, dass bedeutet insbesondere, dass die Korrelation der Zustandsvariablen von Gitterpunkten einen gleichen Zeitpunkt oder mehrere gleiche Zeitpunkte betrifft. Es kann aber ebenso bevorzugt eine Korrelation verschiedener Gitterpunkte zu verschiedenen Zeitpunkten betrachtet werden. Dann handelt es sich bevorzugt bei dem resultierenden Netzwerk aus miteinander durch Links verbundenen Knoten um ein zeitliches Netzwerk. Es kann ebenso bevorzugt sein, Mischformen aus räumlichen und zeitlichen Netzwerken zu bilden. Die Bildung des räumlichen und/oder zeitlichen Netzwerks betrifft bevorzugt mindestens einen Zeitpunkt, bevorzugt einen Zeitraum umfassend mehrere Zeitpunkte der Zeitreihen. Der bei der Auswertung beachtete Zeitraum sowie der Zeitpunkt der Auswertung werden dabei bevorzugt sinnvoll an die zu betrachtenden Größen und/oder Vorgänge angepasst. Die Bezeichnung der Komponenten des Netzwerks, also bevorzugt Knoten und Links, orientiert sich insbesondere an den Begrifflichkeiten der Graphentheorie, die bevorzugt bei der Bildung des Netzwerks und der Netzwerkanalyse zum Einsatz kommt. Link ist dabei bevorzugt ein synonymer Begriff zu der aus der Graphentheorie bekannten Kante.

Im weiteren Verlauf des Verfahrens kommt es zu einer Durchführung einer Netzwerkanalyse zu einer Bestimmung von mindestens einem statistischen Netzwerkmaß des Netzwerks. Eine Netzwerkanalyse betrachtet bevorzugt das Netzwerk, wobei die Analyse auf die Betrachtung miteinander durch Links in Verbindung stehender Knoten abzielt und durch diese Betrachtung verschiedene statistische Netzwerkmaße ermittelt werden. Ein Beispiel für ein solches statistisches Netzwerkmaß ist die Anzahl der Verbindungen eines Knotens zu anderen Knoten, bevorzugt Netzwerk-Grad genannt. Eine solche Netzwerkanalyse ist dem Fachmann bekannt, beispielsweise aus der empirischen Sozialforschung, bei der auf diese Art bevorzugt soziale Netzwerke untersucht werden können.

In einem nächsten Schritt wird eine Analyse des Netzwerkmaßes durchgeführt. Dabei können beispielsweise Knoten mit besonders hohem und/oder niedrigem Netzwerkgrad bestimmt werden.

Es kann ebenso bevorzugt sein, dass die Analyse des Netzwerks zur Bestimmung eines Netzwerkmaßes auch schon einmal in einem vorherigen Schritt integriert ist, bei dem die Bildung eines räumlichen und/oder zeitlichen Netzwerks vorgenommen wird, indem jede Gitterzelle durch einen Knoten repräsentiert wird und bezüglich der Zeitreihen korrelierte Paare von Knoten durch einen Link verbunden werden. Dabei wird die Korrelation von Knoten in zwei Schritten bestimmt. Zuerst wird wie oben geschildert die Korrelation zwischen Knoten bestimmt und korrelierte Knoten werden durch Links verbunden, dann wird die Netzwerkanalyse durchgeführt, wobei nun die Korrelation zwischen den bei dieser Analyse bestimmten Netzwerkmaßen bestimmt wird. Korrelierte Knoten werden wiederum durch Links verbunden und das Verfahren wird wie beschrieben weitergeführt, in dem nun wiederum die Netzwerkanalyse stattfindet. Dies wird bevorzugt ebenso als Netzwerk eines Netzwerks bezeichnet.

Es kann ebenso bevorzugt sein, dass bei einem "network of networks" zwei verschiedene Netzwerke miteinander durch Links verbunden sind, z. B. ein Netzwerk aus Temperaturdaten und eins aus Geschwindigkeitsdaten. Die Links zwischen beiden Netzwerken können unterschiedlich definiert sein, z. B. ebenfalls mittels Korrelation (nun bevorzugt Korrelation zwischen Temperatur und Geschwindigkeit) oder einfach durch die Lage der Knoten, wobei Knoten am gleichen Ort bevorzugt immer miteinander verbunden werden (sogenannte Multiplex-Netzwerke). Bevorzugt ist dies nicht auf 2 Netzwerke beschränkt, es können insbesondere auch mehr als zwei und ebenso beliebig viele sein, wobei dann bevorzugt die Verbindungen zwischen den Einzelnetzwerken auch wieder ein Netzwerk ergibt (daher "network of networks").

Wird im Dokument von einem thermoakustische Instabilitätszustand bzw. von thermoakustischen Instabilitätszuständen gesprochen, ist vorzugweise ebenso ein aeroakustischer und/oder aeroelastischer Instabilitätszustand bzw. aeroakustische und/oder aeroelastische Instabilitätszustände gemeint. Da vorzugsweise der Entstehung von aeroakustischen und/oder aeroelastischen Instabilitätszuständen ähnliche Wirkmechanismen zugrunde liegen, können vorteilhafterweise auch gleiche oder gleichartige Kontroll- und/oder Detektionsmechanismen verwendet werden, z. B. gleichartige und/oder gleiche Kontrollelemente. Insbesondere kann es vorzugsweise gegeben sein, dass die verschiedenen Arten von Instabilitätszuständen gleichzeitig auftreten und daher vorzugsweise eine Minimierung von thermoakustischen Instabilitätszuständen auch mit einer Minimierung von aeroakustischen und/oder aeroelastischen Instabilitätszuständen einhergeht. Bevorzugt können ebenso wie thermoakustische Instabilitätszustände auch aeroakustische und/oder aeroelastische Instabilitätszustände durch Detektion des Verbrennungszustands und/oder kontrollierte Störung des Verbrennungsvorgangs minimiert werden, wie es in diesem Dokument vorzugsweise exemplarisch für thermoakustische Instabilitätszustände beschrieben wird.

Dabei ist die Analyse des Netzwerkmaßes konfiguriert für eine Minimierung von thermoakustischen Instabilitätszuständen eines Verbrennungsvorgangs durch eine kontrollierte Störung des Verbrennungsvorgangs durch mindestens ein Kontrollelement. Das bedeutet bevorzugt, dass bei der Analyse des Netzwerkmaßes Erkenntnisse gewonnen werden, die für eine passive Regelung und/oder eine aktive Regelung eines Verbrennungsvorgangs einer Gasturbine durch eine kontrollierte Störung des Verbrennungsvorgangs durch mindestens ein Kontrollelement verwendet werden können, wobei diese Regelung eine Minimierung von thermoakustischen Instabilitätszuständen eines Verbrennungsvorgangs zum Ziel hat. Eine kontrollierte Störung der Verbrennung bzw. des Verbrennungsvorgangs kann insbesondere durch schrittweises Einspritzen von Brennstoff und/oder durch die Nutzung von sogenannten "micro jets" erzielt werden, welche bevorzugt zur lokalen Einspritzung eines Fluides, insbesondere Wasser und/oder Luft, verwendet werden. Das Kontrollelement ist dabei bevorzugt der "micro-jet" bzw. der Einspritzer zum schrittweisen Einspritzen. Eine passive Regelung zielt bevorzugt darauf ab, einen geeigneten Bereich innerhalb des Verbrennungsvolumens der Gasturbine zu bestimmen, in dem die kontrollierte Störung stattfinden soll. Der Begriff passive Regelung bringt dabei bevorzugt zum Ausdruck, dass dieser Bereich durch das Verfahren festgelegt wird und danach unverändert bleibt. Die Störung kann dabei während der Verbrennung bevorzugt permanent stattfinden und/oder zuschaltbar sein, bspw. bei Bedarf und/oder in festen Zeitintervallen. Die Bestimmung eines optimalen Zeitpunkts einer bei Bedarf zuschaltbaren kontrollierten Störung während des Verbrennungsvorgangs ist dabei bevorzugt der aktiven Regelung zuzuordnen. Aktive Regelung kann jedoch ebenfalls bedeuten, dass der Bereich der Störung während des Verbrennungsvorgangs veränderbar und auf eine effiziente Minimierung eines thermoakustischen Instabilitätszustands hin optimierbar ist. Bei der durchgeführten Analyse des Netzwerkmaßes wird dabei bevorzugt festgestellt, welche daraus resultierenden Größen geeignet sind, einen geeigneten Bereich für eine möglichst effiziente Minimierung eines thermoakustischen Instabilitätszustands durch eine kontrollierte Störung festzustellen bzw. welche daraus resultierenden Größen eines thermoakustischen Instabilitätszustand ankündigen bzw. charakterisieren. Als Beispiel können besonders hohe Werte des Netzwerkgrades geeignete Bereiche zur Störung anzeigen, z. B. für eine passive Regelung. Als anderes Beispiel können Werte des Netzwerkgrades oberhalb eines Schwellwerts, insbesondere innerhalb eines bestimmten Bereichs des Verbrennungsvolumens, ein Anzeichen für eine einsetzende thermoakustische Instabilität sein. Dabei beziehen sich die Netzwerkmaße natürlich bevorzugt immer auf Knoten, die Knoten auf Gitterzellen und diese auf Volumenbereiche des Verbrennungsvolumens. So können bevorzugt Rückschlüsse von den Netzwerkmaßen auf das eigentliche Verbrennungsvolumen und den Verbrennungsvorgang gezogen werden. Des Weiteren beziehen sich die Netzwerkmaße bevorzugt auf gewisse betrachtete Zeiträume der Zeitreihen der Zustandsvariablen. Daher kann durch diese Netzwerkmaße insbesondere auf den Zustand während des betrachteten Zeitraums geschlossen werden. Die bei der Analyse des Netzwerkmaßes bevorzugt durchgeführte Bestimmung geeigneter Netzwerkmaße sowie geeigneter Werte dieser Maße kann sich vorteilhafterweise auf theoretische Kenntnisse über den Verbrennungsvorgang und dessen Wirkung auf diese Netzwerkmaße stützen. Ebenso können aber auch Simulationen und/oder Versuchsreihen an Gasturbinen zu Kenntnissen führen, die die Bestimmung ermöglichen. Durch Simulation oder Messung von Verbrennungsvorgängen und insbesondere von thermoakustischen Instabilitätszuständen können bevorzugt benötigte Kenntnisse gewonnen werden.

Eine passive Regelung kann dabei bevorzugt durch das computerimplementierte Verfahren bereits in einem Entwicklungsstadium durch reine Simulation und/oder Testreihen an einem Versuchsaufbau ermöglicht werden. Die eigentliche passive Regelung findet natürlich an der betriebsfertigen und laufenden Gasturbine statt, die passiven Regelung wird dabei durch Festlegung eines geeigneten Bereichs für eine kontrollierte Störung bevorzugt jedoch bereits im Voraus festgelegt.

Das Verfahren ermöglicht eine besonders effiziente Minimierung von thermoakustischen Instabilitätszuständen. Insbesondere die passive ist dabei besonders einfach und benötigt neben dem Kontrollelement keine weitere Komponente für die Gasturbine. Die aktive Regelung wiederum ist für eine besonders effektive Minimierung von thermoakustischen Instabilitätszuständen geeignet, die einen sicheren Betrieb der Gasturbine ohne wesentliche Leistungseinbußen ermöglicht, da die kontrollierte Störung optimiert und/oder ein- und ausgeschaltet bzw. dosiert wird. Somit ist eine technische Wirkung im Sinne einer Verbesserung, insbesondere einer Leistungssteigerung und Erhöhung der Sicherheit einer Gasturbine gegeben.

Auch das computerimplementierte Simulations-, Auswertungs- bzw. Rechenverfahren selber hat eine technische Wirkung, da dieses Rechenverfahren zur Minimierung von thermoakustischen Instabilitäten besonders effizient auf Rechnerarchitekturen abgestimmt ist und somit vorteilhafterweise Rechenleistung und Energie sparen kann. Auch müssen bei der Simulation bzw. Rechnung selber technische Gedanken über das Verbrennungsvolumen und den Verbrennungsvorgang einfließen, da technische Vorgänge (Verbrennung in einer Gasturbine, thermoakustische Instabilitäten) berechnet, ausgewertet bzw. simuliert werden.

Die vorliegende Offenbarung sieht ein System und ein Verfahren zum Optimieren einer passiven oder langsamen, bevorzugt aktiven Steuerung bzw. Regelung von das System schädigenden oszillatorischer Instabilitäten in Fluidsystemen welche für solche oszillatorischen Instabilitäten anfällig sind, auch thermoakustische Instabilität genannt. Die Erfindung ist anwendbar auf Systeme, die turbulente Strömungen mit sich bringen und auf oszillatorische Instabilitäten stoßen, z. B. Geräte wie Gasturbinen, aeroakustische Instabilitäten oder aeromechanische Instabilitäten.

Das offenbarte Verfahren und System sind konfiguriert zum Erzeugen komplexer räumlichzeitlicher Netzwerke, die aus den räumlich-zeitlichen Daten, insbesondere den physikalischen Eigenschaften der Volumenbereiche bzw. den Zustandsvariablen des Strömungsfelds bzw. deren Zeitreihen aufgebaut sind, um die kritischen Bereiche des reaktiven Strömungsfelds zu identifizieren, die die Dynamik des Strömungsfelds während thermoakustischer Instabilität beeinflussen. Ferner wird eine optimale Steuerungsstrategien bzw. Regelungsstrategie bereitgestellt, die angewendet werden muss, um die oszillatorische Instabilität zu steuern, indem die aus den räumlich-zeitlichen Daten aufgebauten räumlichzeitlichen Netzwerke unter Verwendung der Theorie der komplexen Netzwerke analysiert werden. In einigen Ausführungsformen sind das Verfahren und das System konfiguriert, um optimale Steuerungsstrategien zu identifizieren, um den Beginn von oszillatorischen Instabilitäten in anderen aero-mechanischen Systemen, die eine turbulente Strömung umfassen, einschließlich aeroakustischer und aero-mechanischer Systeme, einzudämmen.

Zunächst werden die Fließfeldcharakteristiken für das untersuchte System entweder durch Experimente oder durch Simulationen mit hoher Genauigkeit erhalten. Dann wird das komplexe Netzwerk entsprechend den Strömungsfeldcharakteristiken gebildet. Die topologischen Merkmale dieses konstruierten bzw. gebildeten Netzwerks werden dann verwendet, um den kritischen Bereich des Strömungsfelds und damit die optimale Strategie zur Steuerung und/oder Eindämmung der thermoakustischen Instabilität zu identifizieren, den sogenannten geeigneten Bereich für eine kontrollierte Störung. Das aufgebaute Netzwerk kann bevorzugt ein räumliches Netzwerk sein, in dem bspw. die Zeitinformation bezüglich des Netzwerks gemittelt wird, oder ein räumlich-zeitliches Netzwerk, das sowohl die räumliche als auch die zeitliche Dynamik des Systems erfasst. Das Netzwerk kann auf der Grundlage der Pearson-Korrelation aufgebaut werden. In einer anderen Ausführungsform kann das Netzwerk basierend auf gegenseitigen Informationen (auch Transinformation genannt) und / oder bedingten Maßen und dergleichen aufgebaut sein. Die Analyse kann auch auf einem Netzwerk von Netzwerken oder Multiplex-Netzwerken basieren, wobei eine oder mehrere Feldvariablen zum Aufbau des Netzwerks verwendet werden.

Obwohl es passive Steuermethoden bzw. Regelungsmethoden gibt, die für die (passive) Kontrolle oszillatorischer Instabilitäten in fluiddynamischen Systemen existieren, wird die Kontrolle oft durch mehrere Versuche von Versuch und Irrtum optimiert. Das offenbarte Verfahren und System sind so konfiguriert, dass sie die bevorzugt Strömungsfeld-Eigenschaften der Vorrichtung während des Einsetzens der oszillatorischen Instabilität analysieren, wie Geschwindigkeit, Wirbelstärke, Wärmefreisetzungsrate oder Mischungsverhältnis und dabei Maße aus der Theorie der komplexen Netzwerke, wie z. B. Netzwerk-Grad, Cluster-Koeffizient, Betweenness-Koeffizient und/oder Closeness-Koeffizient verwenden. Dabei werden kritische Bereiche im Strömungsfeld identifiziert, die für die oszillatorische Instabilität verantwortlich sind. Ferner identifiziert die Erfindung auch optimale Steuerungsstrategien, um das Auftreten von oszillatorischen Instabilitäten zu vermeiden. Ein Beispiel für eine solche Steuerungsstrategie kann das Auswählen optimaler Orte von Lufteinspritzungen z.B. durch micro-jets sein, um die thermoakustische Instabilität einer Vorrichtung wie eines Gasturbinentriebwerks zu mildern.

In einer bevorzugten Ausführungsform der Erfindung wird für jedes Paar von Knoten ein Korrelationskoeffizient der jeweiligen Zeitreihen gebildet und ein Paar von Knoten ist ein korreliertes Paar, wenn der Korrelationskoeffizient einen Schwellwert überschreitet. Hierbei handelt es sich bevorzugt um den Korrelationskoeffizient nach Pearson. Aber auch andere Korrelationskoeffizienten, insbesondere die oben genannten, kommen in Frage. Ein Schwellwert ist bevorzugt ein im aufgrund von Erkenntnissen aus theoretischen Überlegungen, Vorversuchen und/oder Simulationen festgelegter Wert, bei dessen Überschreiten ein Verfahrensschritt durchgeführt wird, vorliegend insbesondere die Festlegung, ob ein paar von Knoten ein korreliertes Paar ist. Bei der Betrachtung der Korrelation von Zeitreihen werden insbesondere die Zeitreihen der jeweiligen Knoten betrachtet. Durch diese bevorzugte Ausführungsform können überraschend einfach Korrelationen zwischen Knoten bestimmt werden und somit durch die dadurch gewonnenen Erkenntnisse über den Verbrennungsvorgang eine Minimierung thermoakustischer Instabilitäten erreicht werden.

In einer weiteren bevorzugten Ausführungsform der Erfindung entspricht der Schwellwert mindestens dem 25% Quantil aller gebildeten Korrelationskoeffizienten. Ein Quantil ist insbesondere ein Schwellwert der Statistik, für den gilt, dass ein bestimmter Anteil eines erhobenen Werteensembles kleiner ist als das Quantil, der Rest ist größer. Das 25-%-Quantil ist bevorzugt der Wert, für den gilt, dass 25 % aller Werte kleiner sind als dieser Wert. Bei dem zu betrachtenden Werteensemble handelt es sich bevorzugt um das Ensemble aller gebildeten Korrelationskoeffizienten. Es kann ebenso bevorzugt sein, ein 5 %Quantil, ein 10 % Quantil, ein 15 % Quantil ein 20 % Quantil, ein 30 % Quantil, ein 35 % Quantil, in 40 % Quantil, ein 45 % Quantil, ein 50 % Quantil, ein 55 % Quantil, ein 60 % Quantil, ein 65 % Quantil, ein 70 % Quantil, ein 75 % Quantil, ein 80 % Quantil, ein 85 % Quantil, ein 90 % Quantil und/oder ein 95 % Quantil festzulegen. Es kann ebenso bevorzugt anstelle eines Quantils als Schwellwert ein Schwellwert auf anderer Basis festgelegt werden, z. B. direkt ein bestimmter Wert des Korrelationskoeffizienten aufgrund theoretischer Überlegungen. Diese Ausführungsform hat sich als überraschend geeignete Festlegung zur Bestimmung korrelierter Paare erwiesen.

In einer weiteren bevorzugten Ausführungsform der Erfindung ist die Zustandsvariable ausgesucht aus der Gruppe umfassend lokale Reaktionsrate, Mischungsverhältnis, Geschwindigkeit, Druck, Druckgradient, Temperatur und/oder Wirbelstärke. Die Zustandsvariable bezieht sich dabei bevorzugt auf das bei Verbrennungsvorgang im Verbrennungsvolumen enthaltene bzw. bei der Simulation des Verbrennungsvorgangs simulierte Fluid. Die Reaktionsrate bezieht sich beispielsweise auf die bei einer Verbrennung ablaufende Reaktion, das Mischungsverhältnis bezieht sich bevorzugt auf die im Fluid umfassten Substanz- und/oder Zustandsmischungen. Die Wirbelstärke bezieht sich bevorzugt ebenso auf das Fluid und/oder dessen Mechanik. Diese Zustandsvariablen sind zur Minimierung der thermoakustischen Instabilität besonders gut geeignet.

In einer weiteren bevorzugten Ausführungsform der Erfindung umfasst die Minimierung von thermoakustischen Instabilitätszuständen eines Verbrennungsvorgangs durch eine kontrollierte Störung des Verbrennungsvorgangs eine Festlegung mindestens eines geeigneten Bereichs des Verbrennungsvolumens für eine kontrollierte Störung des Verbrennungsvorgangs und/oder eine Detektion eines Verbrennungszustands. Für eine verbesserte Minimierung von thermoakustischen Instabilitätszuständen durch passive und/oder aktive Regelung ist eine Festlegung mindestens eines geeigneten Bereichs des Verbrennungsvolumens für eine kontrollierte Störung des Verbrennungsvorgangs besonders gut geeignet. Eine Detektion eines Verbrennungszustands ist insbesondere für eine Minimierung von thermoakustischen Instabilitätszuständen durch aktive Regelung geeignet, bei der während des Verbrennungszustands über das Ein- und Ausschalten bzw. über Umfang und/oder Art der kontrollierten Störung des Verbrennungsvorgangs entschieden wird, um die Minimierung besonders effektiv zu gestalten. Dabei ist mit Detektion des Verbrennungszustands insbesondere eine Detektion einer vorliegenden und/oder sich ankündigenden thermoakustischen Instabilität gemeint. Somit ist die thermoakustischen Instabilität bzw. der thermoakustische Instabilitätszustand bevorzugt ein Verbrennungszustand, der detektiert werden kann. Aber auch andere Zustände, welche insbesondere eine thermoakustischen Instabilität ankündigen, sind bevorzugt mit Zustand des Verbrennungsvorgangs gemeint und können detektiert werden.

In einer weiteren bevorzugten Ausführungsform der Erfindung ist der Verbrennungszustand ausgesucht aus der Gruppe umfassend Verbrennungsrauschen, Intermittenz und/oder thermoakustische Instabilität. Verbrennungsrauschen bezeichnet bevorzugt den "normalen" Verbrennungszustand innerhalb dessen die physikalischen Eigenschaften bzw. Zustandsvariablen im gewünschten Bereich liegen und keine thermoakustische Instabilität vorherrscht. Dabei fluktuieren insbesondere alle physikalischen Eigenschaften bzw. Zustandsvariablen statistisch innerhalb eines Bereichs, bevorzugt eines Normbereichs. Die Intermittenz ist bevorzugt ein Übergangszustand zwischen Verbrennungsrauschen und thermoakustischer Instabilität. Dieser Zustand ist bevorzugt selber noch nicht unbedingt problematisch, jedoch kann er insbesondere eine drohende bzw. bevorstehende thermoakustische Instabilität ankündigen. Durch eine Möglichkeit der Detektion bevorzugt all dieser Verbrennungszustände kann eine besonders effiziente und fein gesteuerte Minimierung von thermoakustischen Instabilitätszuständen erreicht werden. Es kann vorteilhafterweise bereits eine kontrollierte Störung vor dem Einsetzen einer thermoakustischen Instabilität erreicht werden, z. B. durch Detektion einer Intermittenz. Insbesondere ist jedoch bevorzugt dass mindestens eine Intermittenz detektiert wird, besonders bevorzugt mindestens eine thermoakustische Instabilität. So kann eine besonders einfache aktive Regelung und/oder Minimierung von thermoakustischen Instabilitäten erreicht werden.

In einer weiteren bevorzugten Ausführungsform der Erfindung umfasst die Analyse des Netzwerkmaßes eine Bestimmung mindestens eines geeigneten Netzwerkmaßes für die Festlegung des geeigneten Bereichs des Verbrennungsvolumens für eine kontrollierte Störung des Verbrennungsvorgangs und/oder die Detektion eines Verbrennungszustands. In dieser Ausführungsform wird ein Netzwerkmaß bestimmt, welches geeignet ist, mit den vorstehend genannten Mittel das primäre Ziel des Verfahrens, die Minimierung von thermoakustischen Instabilitätszuständen zu erreichen, insbesondere also durch die Festlegung des geeigneten Bereichs des Verbrennungsvolumens für eine kontrollierte Störung des Verbrennungsvorgangs, bevorzugt auch als passive Regelung bezeichnet und/oder durch die Detektion eines Verbrennungszustands, vorteilhafterweise für eine aktive Regelung des Verbrennungsvorgangs. Das Verfahren wählt dabei bevorzugt aus geeigneten und bekannten Netzwerkmaßen dasjenige heraus, welches die vorgenannte Zielstellung über die genannten Mittel ermöglicht. Dies kann beispielsweise festgestellt werden, indem durch Simulation und/oder Messung des Verbrennungsvorgangs die Effektivität der jeweiligen Maßnahme überprüft wird. Z. B. kann so überprüft werden, ob mindestens ein Netzwerkmaß besonders geeignet ist, verschiedene real messbare und/oder simulierbare Verbrennungszustände zu unterscheiden und/oder mindestens einen solchen Verbrennungszustand zu detektieren. Ebenso kann bspw. überprüft werden, ob der durch mindestens ein Netzwerkmaß nahegelegte Bereich sich in Versuchen und/oder Simulationen als besonders geeignet für eine kontrollierte Störung zur Minimierung eines thermoakustischen Instabilitätszustands erweist. Es hat sich überraschenderweise gezeigt, dass die Bestimmung mindestens eines Netzwerkmaßes für die Festlegung des geeigneten Bereichs des Verbrennungsvolumens für eine kontrollierte Störung des Verbrennungsvorgangs und/oder die Detektion eines Verbrennungszustands ein besonders effizientes und wartungsarmes Mittel zur Minimierung thermoakustischer Instabilitätszustände ist. Das im Stand der Technik verwendete "trial and error"-Verfahren wird vorteilhafterweise unnötig.

In einer weiteren bevorzugten Ausführungsform der Erfindung umfasst die Bestimmung mindestens eines geeigneten Netzwerkmaßes eine Betrachtung von Schwellwerten und/oder Extremwerten des Netzwerkmaßes bei verschiedenen Verbrennungszuständen. Die vorgenannte Bestimmung umfasst dabei insbesondere die Betrachtung mindestens ein Netzwerkmaß oberhalb eines bestimmten Schwellwerts. Dieses Netzwerkmaß und der mindestens eine damit verknüpfte Knoten können zu beschriebenen Bestimmung bevorzugt herangezogen werden, wenn sie herfür aufgrund von theoretischen Überlegungen, Versuchen und/oder Simulationen als geeignet erachtet werden. Insbesondere Versuche und/oder Simulationen bei verschiedenen Verbrennungszuständen zeigen geeignete Schwell- und/oder Extremwerte an, die für diese Verbrennungszustände bevorzugt in bestimmten Bereichen typisch sind. Diese Erwägungen und das Heranziehen dieses Netzwerkmaßes oberhalb eines Schwellwerts kann bevorzugt unter "Betrachtung" verstanden werden. Das Heranziehen kann z. B. bedeuten, dass ein Netzwerkmaß oberhalb eines Schwellwerts einen geeigneten Bereich für eine kontrollierte Störung und/oder einen bestimmten Verbrennungszustand kennzeichnet. Dabei kann der Schwellwert aufgrund von theoretischen Überlegungen, Versuchen und/oder Simulation bestimmt werden. Es kann ebenso bevorzugt sein, dass ein Netzwerkmaß unterhalb eines bestimmten Schwellwerts betrachtet wird. Es kann unter bevorzugt gleichen Gesichtspunkten ebenfalls eine Betrachtung von Extremwerten des Netzwerkmaßes herangezogen werden.

In einer weiteren bevorzugten Ausführungsform der Erfindung ist das Netzwerkmaß ausgesucht aus der Gruppe umfassend Netzwerk-Grad, Cluster-Koeffizient, Betweenness-Koeffizient und/oder Closeness-Koeffizient. Dem Fachmann sind die Netzwerkmaße und die zur Bestimmung benötigten Verfahrensschritte bekannt. Im untenstehenden Beispielteil werden die beschriebenen Netzwerkmaße ebenfalls erläutert werden. Ein Netzwerkmaß ausgesucht aus dieser Gruppe stellt eine Abkehr vom technischen Üblichen dar und hat eine verbesserte Minimierung von thermoakustischen Instabilitätszuständen zur Folge.

In einer weiteren bevorzugten Ausführungsform der Erfindung umfasst eine Detektion der Intermittenz und/oder der thermoakustischen Instabilität die Bestimmung des Closeness-Koeffizienten oberhalb eines Schwellwerts und die Festlegung eines geeigneten Bereichs des Verbrennungsvolumens für eine kontrollierte Störung des Verbrennungsvorgangs die Bestimmung des Maximalwerts des Closeness-Koeffizienten, bevorzugt oberhalb des Schwellwerts. Diese Ausführungsform stellt eine besonders vorteilhafte Variante dar. Zur Detektion einer Intermittenz und/oder einer thermoakustischen Instabilität kann der Closeness-Koeffizient oberhalb eines Schwellwerts herangezogen werden. Dabei ist der Schwellwert vorteilhafterweise durch Versuche, theoretische Überlegungen und/oder Simulationen festgelegt worden. Werden nun Closeness-Koeffizienten oberhalb dieses Schwellwerts festgestellt, bedeutet dies bevorzugt das Vorliegen einer Intermittenz und/oder einer thermoakustischen Instabilität. Dies ist bevorzugt zur aktiven Regelung zur Minimierung der thermoakustischen Instabilität relevant. Es ist bevorzugt jedoch ebenso bedeutsam für die Festlegung geeigneter Bereiche für eine kontrollierte Störung, da diese geeigneten Bereiche und das hierfür charakteristische, mindestens eine Netzwerkmaß bevorzugt erst bei einer Intermittenz und/oder einer thermoakustischen Instabilität zu Tage treten. Daher ist es vorteilhaft, das Vorliegen eines solchen Verbrennungszustands zunächst einmal zu detektieren. Die Bestimmung eines geeigneten Bereichs für eine kontrollierte Störung wird dann insbesondere durch Bestimmung eines Maximalwerts des Closeness-Koeffizienten vorgenommen. Vorteilhafterweise werden dabei die Knoten, welche im Wesentlichen den Maximalwert des Closeness-Koeffizienten aufweisen in die Volumenbereiche überführt, die durch diese repräsentiert werden. Diese Volumenbereiche sind dann vorteilhafterweise die geeigneten Bereiche für eine kontrollierte Störung. Dabei ist es bevorzugt, dass Maximalwerte nur oberhalb eines Schwellwerts betrachtet werden. Dieser Schwellwert kann bspw. der oben genannte Schwellwert zur Detektion einer Intermittenz bzw. einer thermoakustischen Instabilität sein. So kann vorteilafterweise sichergestellt werden, dass es sich bei dem Maximalwert auch um einen "relevanten" Maximalwert handelt, welcher z. B. einen Bereich maximaler Closeness während einer thermoakustischen Instabilität handelt. Physikalisch bestimmt der Closeness-Koeffizient bevorzugt die Geschwindigkeit der Ausbreitung von Informationen in einem Netzwerk. Wenn z. B. eine Störung auf einen Netzpunkt mit der höchsten Closeness einwirkt, erreicht er am schnellsten andere Netzpunkte im Strömungsfeld. Dabei ist natürlich insbesondere die Closeness während einer Intermittenz und/oder einer thermoakustischen Instabilität relevant, da diese ja gestört werden soll. So kann eine kontrollierte Störung besonders effektiv wirken.

Begriffe wie im Wesentlichen, ungefähr, etwa, ca. etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1%. Ähnlich beschreibt bevorzugt Größen die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 %.

In einer weiteren bevorzugten Ausführungsform der Erfindung umfasst die Detektion eines Verbrennungszustands durch Analyse des Netzwerkmaßes die Festlegung eines kritischen Werts und/oder eines kritischen Zeitreihenverlaufs von mindestens einer Zustandsvariablen in mindestens einem Volumenbereich. Diese Vorzugsvariante beschreibt bevorzugt den Rückschluss, von der Festlegung geeigneter Netzwerkmaße für eine passive und/oder aktive Regelung und geeigneter Schwell- und/oder Extremwerte mindestens eines Netzwerkmaßes zu den tatsächlich zugrundeliegenden Zustandsvariablen und/oder physikalischen Eigenschaften. Können bestimmte Konstellation mindestens einer Zustandsvariablen, z. B. bestimmte Werte und/oder Bereiche mit bestimmten Werten, bspw. Schwell- und/oder Maximalwerten (kritische Werte), aber auch bestimmten Korrelationen zwischen Werten eindeutig mit bestimmten beschriebenen Konstellationen mindestens eines Netzwerkmaßes verknüpft werden, so kann durch das Verfahren eine bestimmte Konstellation mindestens einer physikalischen Eigenschaft bevorzugt eindeutig zu einer Detektion eines Verbrennungszustands herangezogen werden. Es kann ebenso bevorzugt auf einen kritischen Zeitreihenverlauf mindestens einer Zustandsvariablen ankommen, der sich bevorzugt aus der Netzwerkanalyse als eindeutiges Kennzeichen eines Verbrennungszustands ergeben hat. So kann insbesondere eine aktive Regelung eines realen Verbrennungsvorgangs besonders einfach vorgenommen werden, indem die mindestens eine jeweilige physikalische Eigenschaft gemessen wird und bestimmte Konstellation (Werte, Bereiche von Werten, Korrelationen von Werten etc.) direkt für eine Detektion eines Verbrennungszustands herangezogen werden. Bspw. kann eine solche aktive Regelung über eine besonders robust und wartungsarm zu realisierende Druckmessung ermöglicht werden. Haben sich Bereiche und/oder Punkte innerhalb des Verbrennungsvolumens bei dieser Vorzugsvariante herausgestellt, die für diese Messung besonders und/oder ausschließlich relevant sind, kann eine besonders kostengünstige, einfache und effiziente Messung an diesem Punkt und/oder Bereich ausreichend sein für eine Detektion des Verbrennungszustands.

In einer weiteren bevorzugten Ausführungsform der Erfindung umfasst die Minimierung von thermoakustischen Instabilitätszuständen eines Verbrennungsvorgangs durch eine kontrollierte Störung des Verbrennungsvorgangs folgende Schritte:

- Messung der Zustandsvariablen durch den Sensor;

- Detektion des Verbrennungszustands durch Vergleich der gemessenen Zustandsvariablen mit dem kritischen Wert und/oder dem kritischen Zeitreihenverlauf der Zustandsvariablen;

- Kontrollierte Störung des Verbrennungsvorgangs durch das mindestens eine Kontrollelement in mindestens einem geeigneten Bereich bei Detektion einer Intermittenz und/oder einer thermischen Instabilität.

Diese Vorzugsvariante beschreibt eine bevorzugte Form der aktiven Regelung, die bevorzugt auf der vorstehend genannten Ausführungsform beruht. Die Bestimmung geeigneter Bereiche hat dabei bevorzugt, z. B. schon innerhalb des Entwicklungsstadiums der Gasturbine, stattgefunden.

So kann die Qualität einer aktiven Regelung zur Minimierung einer thermoakustischen Instabilität gehoben werden.

In einer weiteren bevorzugten Ausführungsform der Erfindung umfasst die Abbildung des Verbrennungsvolumens in Gitterzellen mindestens zwei Dimensionen, bevorzugt drei Dimensionen. Es kann bspw. aus Symmetrieüberlegungen heraus ausreichend sein, das Verbrennungsvolumen zweidimensional, z. B. im Quer- und/oder Längsschnitt darzustellen. Dementsprechend sind vorteilhafterweise auch die Gitterzellen zweidimensional. So kann ein besonders effizientes Verfahren bereitgestellt werden, welches überraschend wenig Rechenleistung benötigt. Es kann jedoch ebenso bevorzugt sein, dass Verbrennungsvolumen dreidimensional darzustellen und dementsprechend auch die Gitterzellen vorteilhafterweise dreidimensional zu wählen. So kann eine besonders präzise Darstellung des Verbrennungsvolumens vorgenommen werden, wodurch sich vorteilhafterweise ebenso die Minimierung von thermoakustischen Instabilitäten verbessert.

In einer weiteren bevorzugten Ausführungsform der Erfindung ist das Kontrollelement ausgesucht aus der Gruppe umfassend eine Einspritzvorrichtung (Micro-Jet) eines Fluides, ein Schalldämpfungselement, ein Resonator und/oder veränderbare Einspritzvorrichtung für Treibstoff. Ein Schalldämpfungselement kann bevorzugt bestimmte schalldämpfende Materialien und/oder Oberflächen aufweisen. Eine veränderbare Einspritzvorrichtung kann insbesondere zur schrittweisen und/oder dosierten Einspritzung verwendet werden. Es können bevorzugt auch mehrere Kontrollelemente in einem geeigneten Bereich und/oder in mehreren geeigneten Bereichen umfasst sein. Diese sind bevorzugt, insbesondere im Rahmen einer zuvor beschriebenen aktiven Regelung, individuell ansteuerbar. So kann eine besonders leistungsstarke Minimierung von thermoakustischen Instabilitätszuständen erzielt werden.

In einer weiteren bevorzugten Ausführungsform der Erfindung ist die Messung eine Messung der Geschwindigkeit, der lokalen Wärmeabgabe (local heat release), der Reaktionsrate und/oder des Temperaturfelds und ist ausgesucht aus der Gruppe umfassend thermischen Anemometrie, Staudruckmessung, Blendenmessung, Laser-Doppler-Anemometrie, Particle Image Velocimetry (PIV), Magnetic Resonance Velocimetry (MRV), Particle Tracking Velocimetry (PTV), Doppler Global Velocimetry (GDV), Laser-Zwei-Fokus (L2F), optische Messung durch Ortsfilter, Temperaturmessung, Spektroskopie, Photometrie und/oder der Sensor ist ausgesucht aus der Gruppe umfassend Hitzdraht, Staurohr, Messblende, Laser und Empfangsoptik, PIV-Kamera, MRT Gerät, CCD Sensor, Heißleiter, Kaltleiter, Halbleiter-Temperatursensoren, Transistor, Temperaturfühler mit Schwingquarz, Thermoelement, Infrarot-Sensor, Pyrometer, Wärmebildkamera, Bimetallschalter, Magnetschalter, optischer Temperatursensor Spektrometer und/oder Photometer. Der Fachmann kennt verschiedenen Messmethoden und/oder Sensoren und weiß, wie diese verwendet und/oder angesteuert werden. Dazu können bspw. Mikroprozessoren zur Ansteuerung und Auswertung verwendet werden. Je nach Messmethode und Sensor können ein Sensor oder eine Vielzahl von Sensoren verwendet werden. Wesentlich ist bevorzugt, dass die Messmethode die Bestimmung geeigneter Netzwerkmaße zur Bestimmung geeigneter Bereiche für eine kontrollierte Störung und/oder zur Detektion eines Verbrennungszustands für eine Minimierung einer thermoakustischen Instabilität ermöglicht.

Es können bevorzugt auch Netzwerke und dessen Maße mit weiteren Variablen erstellt werden, z. B. Wärmefreisetzungsrate (lokale Wärmeabgabe), welche insbesondere durch Chemilumineszenz gemessen werden kann, z. B. durch OH-, CH- oder CC-Radikale, des Weiteren bevorzugt planare laserinduzierte Fluoreszenz (PLIF) und/oder Schallquellenverteilung (Produkt aus Druckschwankungen Wärmefreisetzungsrate). Ebenso kann vorteilhafterweise die Wirbelstärke verwendet werden, welche insbesondere aus Geschwindigkeitsmessungen abgeleitet werden kann.

Es ist besonders bevorzugt, dass diese Variablen durch numerische Strömungsmechanik erhalten werden können, insbesondere durch Simulationen wie Large Eddy Simulation (LES, zu Deutsch auch Grobstruktursimulation) oder Reynolds-gemittelte Navier-Stokes-Gleichungen (RANS) oder durch direkte numerische Simulation (DNS). Die Zustandsvariable kann dabei insbesondere Geschwindigkeit, Wirbelstärke (eng. Vorticity, Rotation), Wärmefreisetzungsfeld bzw. lokales Wärmeabgabefeld und/oder Schallquellenverteilung sein. Diese Simulationsmethoden haben sich als besonders leistungsstark und effizient erwiesen.

In einer weiteren bevorzugten Ausführungsform der Erfindung umfasst der Verbrennungsvorgangs durch eine kontrollierte Störung des Verbrennungsvorgangs eine Regulation einer kontrollierten Störung des Verbrennungsvorgangs durch einen Regelkreislauf mit einer Rückkopplungsschleife. Der Fachmann weiß, wie er eine solche Regulation implementieren muss. So kann eine besonders sichere Regelung ermöglicht werden.

In einem weiteren Aspekt betrifft die Erfindung die Verwendung eines Computerimplementierten Verfahrens nach der vorherigen Beschreibung zur Minimierung von thermoakustischen, aeroakustischen und/oder aeroelastischen Instabilitätszuständen, bevorzugt bei einem Verbrennungsvorgang in einer Gasturbine.

Der durchschnittliche Fachmann erkennt, dass technische Merkmale, Definitionen und Vorteile bevorzugter Ausführungsformen des erfindungsgemäßen Verfahrens auch für die erfindungsgemäße Verwendung gelten.

In einem weiteren Aspekt betrifft die Erfindung eine Vorrichtung für eine Gasturbine umfassend eine Regeleinheit zur Minimierung von thermoakustischen Instabilitätszuständen bei einem Verbrennungsvorgang in einer Gasturbine, aufweisend ein Verbrennungsvolumen umfassend ein Fluid, wobei die Vorrichtung die folgenden Elemente umfasst:

- mindestens einen Sensor;

- mindestens einen Regelungscomputer sowie

- mindestens ein Kontrollelement;

wobei Sensor und Regelcomputer konfiguriert sind für eine Minimierung von thermoakustischen Instabilitätszuständen eines Verbrennungsvorgangs durch eine kontrollierte Störung des Verbrennungsvorgangs durch ein Kontrollelement, umfassend die folgenden Schritte:

- Durchführung eines Verfahrens nach der vorherigen Beschreibung zur Festlegung geeigneter Bereiche des Verbrennungsvolumens für eine kontrollierte Störung des Verbrennungsvorgangs und zur Detektion eines Verbrennungszustands;

- Messung einer Zustandsvariablen durch den Sensor

- Kontrollierte Störung des Verbrennungsvorgangs durch das Kontrollelement im geeigneten Bereich, bei Detektion einer Intermittenz und/oder einer thermischen Instabilität durch den Regelcomputer.

Der durchschnittliche Fachmann erkennt, dass technische Merkmale, Definitionen und Vorteile bevorzugter Ausführungsformen des erfindungsgemäßen Verfahrens auch für die erfindungsgemäße Vorrichtung gelten. Der Regelungscomputer ist dabei bevorzugt für die Rechenschritte und digitalen Abbildungen des computerimplementierten Verfahrens zuständig. Es kann sich ebenso bei dem Regelungscomputer um eine integrierte Schaltung und/oder ein Netzwerk von Computern bzw. Schaltungen handeln. Der mindestens eine Regelungscomputer kann insbesondere mindestens ein erster Computer sein, durch den, z. B. während des Entwicklungsstadiums der Gasturbine der mindestens einen geeigneten Bereich festgelegt wird. Mindestens ein zweiter Regelungscomputer kann in der Vorrichtung für eine Gasturbine im laufenden Betrieb integriert sein, bspw. in der Regelungselektronik der Gasturbine, um bevorzugt eine aktive Regelung wie vorstehend beschrieben zu erzielen.

In einem weiteren Aspekt betrifft die Erfindung ein Computerprogramm umfassend einen Algorithmus zur Ausführung der Verfahrensschritte nach der vorherigen Beschreibung.

In einem weiteren Aspekt betrifft die Erfindung ein computerlesbares Medium zu Speicherung des Computerprogramms nach der vorherigen Beschreibung.

Detaillierte Beschreibung

Im Folgenden soll die Erfindung anhand von Beispielen und Figuren erläutert werden, ohne auf diese beschränkt zu sein.

Beispiel 1 - Aufbau eines räumlichen Netzwerks

Zur Verdeutlichung der Methodik der Netzwerkkonstruktion wir das Geschwindigkeitsfeld verwendet, das einer turbulenten Brennkammer entspricht. Eine ähnliche Analyse kann jedoch auch für andere Feldgrößen durchgeführt werden, wie beispielsweise lokale Reaktionsgeschwindigkeit, Temperatur, Mischungsverhältnis, Wirbelstärke usw., die entweder aus Experimenten oder durch numerische Simulationen erhalten werden. Das in diesem Fall verwendete Geschwindigkeitsfeld wird durch particle image velocimetry (PIV) erhalten. Diese Analyse kann auch zur Untersuchung oszillatorischer Instabilitäten in anderen Systemen mit turbulenter Strömung eingesetzt werden.

Zunächst wird das erhaltene turbulente reaktive Strömungsfeld in ein regelmäßiges Netz bzw. Gitter aufgeteilt. Dafür werden bevorzugt Volumenbereiche der Brennkammer in das digitale Gitter abgebildet. In einem anderen Szenario können auch unregelmäßige Netze für den Netzwerkaufbau verwendet werden. Jeder Gitterpunkt wird als Knoten betrachtet. Zwei Knoten werden basierend auf der Korrelation zwischen Paaren von Zeitserien der Geschwindigkeit der jeweiligen Knoten verbunden. Es können jedoch auch alternative Kriterien für die Netzwerkkonstruktion verwendet werden, z. B. Ereignissynchronisation, Sichtbarkeit (Visibility), periodische Wiederkehr (recurrence) usw.

In diesem speziellen Beispiel ist das Netzwerk auf der Grundlage der Korrelation von Pearson aufgebaut. Der Korrelationskoeffizient von Pearson ist wie folgt definiert:

$$R_{xy} = \frac{\sum_{i=1}^{n}(x_i - \bar{x})(y_i - \bar{y})}{\sqrt{\sum_{i=1}^{n}(x_i - \bar{x})^2}\sqrt{\sum_{i=1}^{n}(y_i - \bar{y})^2}}$$

Dabei ist $x_i$ bevorzugt das Element einer Geschwindigkeitszeitreihe an einem Gitterpunkt und $y_i$ ist bevorzugt das Element einer anderen Geschwindigkeitszeitreihe an einem anderen Gitterpunkt. $i$ ist der Zeitindex, $n$ ist die Beobachtungslänge (Länge der Zeitreihe). Die arithmetischen Mittel beider Zeitreihen werden durch $\bar{x}$ bzw. $\bar{y}$ dargestellt. Zwei Knoten des Netzwerks sind verbunden, wenn der Pearson-Korrelationskoeffizient zwischen zwei Zeitserien der Geschwindigkeit an den entsprechenden Knoten über einer Schwelle ($R_t$) liegt. $R_t$ wird bevorzugt ausgewählt, indem die Verbindungsdichte des Netzwerks für verschiedene Werte von $R_t$ analysiert werden. Die Verbindungsdichte (p) eines Netzwerks bezieht sich bevorzugt auf das Verhältnis der tatsächlichen Anzahl von Verbindungen zu der maximal möglichen Anzahl von Verbindungen. Wenn $N$ die Anzahl der Knoten eines Netzwerks und $E$ die tatsächliche Anzahl der Verbindungen im Netzwerk ist, wird die Verbindungsdichte bevorzugt gegeben durch:

$$\rho = \frac{2E}{N(N-1)}$$

Dabei ist $N(N-1)/2$ bevorzugt die maximale Anzahl möglicher Verbindungen des gegebenen Netzwerks. In den in dieser Offenbarung vorgestellten Berechnungen wird der Schwellwert des Korrelationskoeffizienten bevorzugt mit 0,25 gewählt, da bei diesem Wert die Variation bzw. die Unterschiede der Verbindungsdichte zwischen Verbrennungsgeräusch, Intermittenz und thermoakustischer Instabilität maximal sind. Maximaler Unterschied bzw. Variation der Verbindungsdichte gewährleistet bevorzugt maximale Variabilität in der Netzwerktopologie, da die turbulente Brennkammer von Verbrennungsgeräuschen via Intermittenz in thermoakustische Instabilität übergeht, was sich wiederum in der räumlichen Verteilung der Netzwerkeigenschaften widerspiegelt. In einem anderen Szenario kann der Schwellenwert auf eine alternative Weise gemäß den Anforderungen der Steuerungsstrategie ausgewählt werden.

Beispiel 2 - Topologische Maßnahmen, die das Netzwerk charakterisieren

Eine Adjazenzmatrix, eine $N \times N$-Ouadratmatrix, beschreibt bevorzugt ein wie beschrieben gebildetes Netzwerk von Knoten vollständig. Die Elemente der Matrix $A_{ij}$ ($i, j = 1, 2, ..., N$) sind bevorzugt gleich Eins, wenn zwischen dem $i$-ten und $j$-ten Knoten eine Verbindung besteht, andernfalls Null. In der vorliegenden Studie sind die Elemente der Adjazenzmatrix, $A_{ij}$, gleich eins, wenn $R_{ij} > R_t$ ist, wobei $R_{ij}$ der Korrelationskoeffizient zwischen der Geschwindigkeitszeitreihe an den Gitterpunkten $i$ bzw. $j$ ist und $R_t$ der Schwellwert des Korrelationskoeffizienten ist. Die so erhaltene Adjazenzmatrix ist eine symmetrische Matrix, da das Korrelationsnetzwerk ungerichtet ist (d. H. $i$ mit $j$ verbunden bedeutet, dass $j$ mit $i$ verbunden ist). Knoten und Gitterpunkt ist hier bevorzugt synonym.

Um die Topologie verschiedener Netzwerke zu vergleichen, werden bevorzugt einige grundlegende Maße verwendet, um das räumliche Netzwerk zu charakterisieren, das sich aus Verbrennungsrauschen, Intermittenz und thermoakustischer Instabilität ergibt. Der Netzwerk-Grad ($k_i$) eines Knotens (Gitterpunkt) $i$ gibt bevorzugt die Anzahl der Gitterpunkte an, die mit einem bestimmten Gitterpunkt verbunden sind. Es ist gegeben durch

$$k_i = \sum_{j=1}^{N} A_{ij}$$

Dabei ist $N$ die Gesamtanzahl der Gitterpunkte im Flussfeld bzw. Strömungsfeld. Es wird erwartet, dass ein Netzpunkt (Knoten) mit einem höheren Netzwerk-Grad als andere einen stärkeren Einfluss auf das Funktionieren des Netzwerks hat. Die Interkonnektivität von Nachbarn eines Gitterpunkts $i$ ist bevorzugt durch den lokalen Cluster-Koeffizient ($Ci$) gegeben. Dieser ist gegeben durch

$$C_i = \frac{2E_i}{k_i(k_i-1)}$$

Dabei ist $E_i$ bevorzugt die Anzahl der Verbindungen zwischen den Nachbarn des Gitterpunkts $i$ und $k_i (k_i - 1)/2$ die maximal mögliche Anzahl von Verbindungen zwischen den Nachbarn. Dieser Koeffizient gibt bevorzugt eine Schätzung der räumlichen Kontinuität der Korrelationen im beispielhaften Geschwindigkeitsfeld (auch andere phy. Eigenschaften bzw. Zustandsvariablen können verwendet werden).

Ein weiteres Netzwerkmaß, das die Wichtigkeit eines Gitterpunkts hervorhebt, ist der Betweenness-Koeffizient ($b_i$). Dieser ist bevorzugt die Summe des Verhältnisses der Anzahl der kürzesten Pfade zwischen zwei Gitterpunkten, die durch einen bestimmten Gitterpunkt verlaufen zur Gesamtzahl der kürzesten Pfade zwischen diesen beiden Gitterpunkten. Mathematisch wird es ausgedrückt als

$$b_i = \sum_{j,k \in N, j \neq k} \frac{n_{jk}(i)}{n_{jk}}$$

Dabei ist $n_{jk}(i)$ die Anzahl der kürzesten Pfade zwischen $j$ und $k$, die durch den Gitterpunkt $i$ gehen. Physikalisch gibt der Betweenness-Koeffizient eines Knotens zwischen Knoten bevorzugt den Umfang der Informationen an, die durch diesen Knoten geleitet werden, wenn davon ausgegangen wird, dass die Informationen durch die kürzesten Pfade im Netzwerk laufen.

Ein weiteres Knoten-Zentralitätsmaß ist der Closeness-Koeffizient ($c_i$), der bevorzugt die Inverse der mittleren kürzesten Weglänge von einem Knoten zu allen anderen Knoten misst. Wenn der kürzeste Weg von einem Gitterpunkt $i$ zu allen anderen verbundenen Gitterpunkten $j$ $d(i, j)$ ist, dann ist der Closeness-Koeffizient gegeben durch

$$c_i = \sum_{j \in N, j \neq i} 2^{-d(i,j)}$$

Physikalisch bestimmt der Closeness-Koeffizient bevorzugt die Geschwindigkeit der Ausbreitung von Informationen im Netzwerk. Wenn z. B. eine Störung auf einen Netzpunkt mit der höchsten Closeness einwirkt, erreicht er am schnellsten andere Netzpunkte im Strömungsfeld.

Die oben genannten Netzwerkmaße sind nur einige repräsentative Maße, verschiedene andere Maße, wie beispielsweise Transitivität, gewichtetes Clustering usw., können bevorzugt ebenfalls zur Charakterisierung der Topologie des erstellten Netzwerks oder Netzwerk eines Netzwerks verwendet werden.

Beispiel 3 - Identifizieren von optimalen Positionen im Strömungsfeld zur Anwendung der Steuerungsstrategie bzw. Regelungsstrategie

Sobald die Netzwerkeigenschaften bewertet sind, wird die relative Stärke dieser Eigenschaften im gesamten Reaktionsfeld untersucht, um die kritischen Stellen im Strömungsfeld zu ermitteln, die die Schwingungsdynamik während thermoakustischer Instabilität steuern. Unterschiedliche Netzwerkmaße beleuchten unterschiedliche Aspekte der Strömungsdynamik. Der Netzwerk-Grad eines Knotens gibt die Anzahl der Nachbarn dieses bestimmten Knotens im räumlichen Netzwerk an. Bei dem mit Pearson-Korrelation aufgebauten räumlichen Netzwerk bedeutet ein sehr hoher Grad, dass die Korrelation zwischen den Geschwindigkeitsschwankungen an dem gegebenen Netzpunkt (hier ist ein Netzpunkt im Strömungsfeld der Knoten) und einer großen Anzahl von anderen Gitterpunkten über dem Schwellenwert des Korrelationskoeffizienten ($R_t$) liegt.

Der Closeness-Koeffizient eines Gitterpunkts misst die Nähe dieses bestimmten Gitterpunkts zu allen anderen Gitterpunkten im Strömungsfeld. Sie ist proportional zum Kehrwert der Summe der kürzesten Weglängen zwischen einem Gitterpunkt und allen anderen Gitterpunkten im Strömungsfeld. Jede Störung, die einem Gitterpunkt mit dem höchsten Wert des Closeness-Koeffizienten gegeben wird, wandert in kürzester Zeit zu allen anderen Gitterpunkten des Strömungsfelds.

Der lokale Cluster-Koeffizient eines Gitterpunkts vermittelt die Idee der Konnektivität zwischen den Nachbarn dieses Gitterpunkts. Hohe Werte für den Clustering-Koeffizienten für einen Netzpunkt bedeuten, dass die Nachbarn des Netzpunkts stark miteinander verbunden sind. Aus der Strömungsperspektive impliziert dies, dass die Korrelation zwischen den Geschwindigkeitsschwankungen der Nachbarn eines bestimmten Netzpunkts oberhalb einer Schwelle liegt. Wenn eine Region einen hohen Netzwerk-Grad und einen hohen Cluster-Koeffizienten aufweist, kann bevorzugt behauptet werden, dass die gegebene Region hinsichtlich Geschwindigkeitsschwankungen räumlich kohärent ist.

Der Betweenness-Koeffizient eines Gitterpunkts gibt den Anteil aller kürzesten Pfade für jedes Paar von Gitterpunkten in dem Strömungsfeld an, das durch den gegebenen Gitterpunkt verläuft. Hohe Werte für den Betweenness-Koeffizient für einen Gitterpunkt legen nahe, dass der Gitterpunkt zwischen zwei Regionen eines Netzwerks liegt und eine große Anzahl von kürzesten Pfaden durch diesen bestimmten Gitterpunkt verläuft. Hohe Werte für den Betweenness-Koeffizient heben die Hauptinformationswege in einem Netzwerk hervor, wenn angenommen wird, dass sich Informationen über kürzeste Pfade in einem Netzwerk ausbreiten. In der vorliegenden Analyse geben die Regionen mit hohem Betweenness-Koeffizient diejenigen Bereiche an, die verschiedene Teile des Flusses miteinander verbinden, die ansonsten unkorreliert sind. In Anbetracht dessen sind Regionen mit hohem Betweenness-Koeffizient für die erhöhten Korrelationen im reaktiven Strömungsfeld während eines geordneten Verhaltens wie thermodynamische Instabilität verantwortlich.

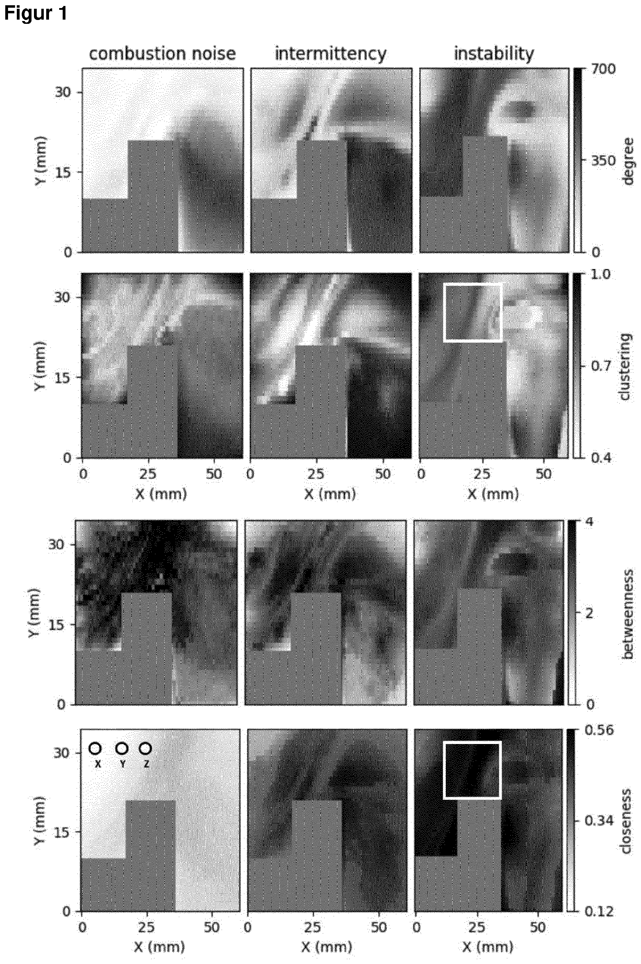

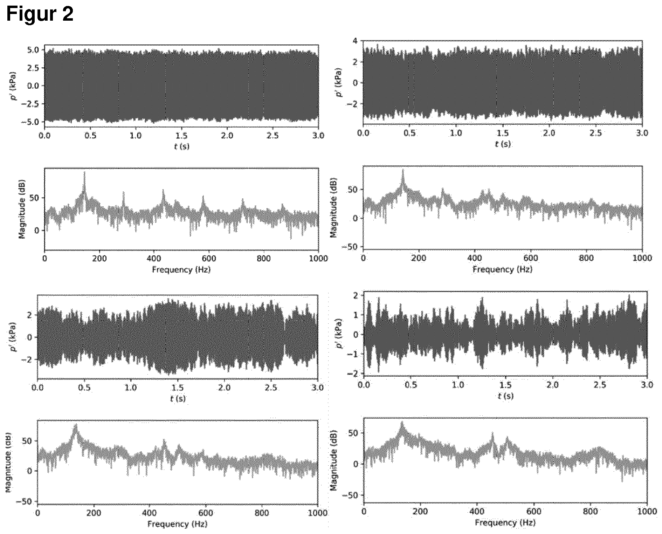

FIGUR 1: räumliche Verteilung von Netzwerk-Grad, Betweenness-Koeffizient, Closeness-Koeffizient und Cluster-Koeffizienten während des Verbrennungsrauschens, der Intermittenz und der thermoakustischen Instabilität, welche durch Konstruktion eines räumlichen Netzwerks unter Verwendung der Pearson-Korrelation erhalten werden, wobei der Schwellwert des Korrelationskoeffizienten bei 0,25 gehalten wird. Zu beachten ist, dass das schwarze Quadrat den Teil der reaktiven Strömung kennzeichnet, der für die Bestimmung der Flussdynamik während thermoakustischer Instabilität am kritischsten ist. Die Punkte X, Y, Z geben die Punkte an, an denen Mikrojets von Luft eingeführt werden, um das lokale Feld zu verändern und somit die thermoakustische Instabilität zu steuern bzw. zu unterdrücken. Die Wirkung der Injektion von Mikrodüsen für die drei Positionen ist in Fig. 2 dargestellt

In Fig. 1 ist zu sehen, dass der Teil der durch das schwarze bzw. weiße Quadrat markierten reaktiven Strömung relativ hohe Werte für den Betweenness-Koeffizienten, Closeness-Koeffizienten und Netzwerk-Grad aufweist, während er einen niedrigen Cluster-Koeffizienten hat. Das weiße Quadrat ist vorzugsweise nicht auf allen Abbildungen verschiedene Koeffizienten betreffend gezeigt, kann jedoch an der durch bevorzugt gleiche x- du y-Koordinaten beschriebene Stelle dazu gedacht werden. Dies zeigt, dass dieser Teil der reaktiven Strömung der Schlüssel ist, um die erhöhte räumliche Korrelation während der thermoakustischen Instabilität zu erzielen. Dieser Bereich war der effektivste Bereich für die Anwendung einer passiven Steuerung. Aus Experimenten wurde ersichtlich, dass, wenn die Kontrolle in Bezug auf Mikrodüsen (micro-jets) in dem zuvor genannten kritischen Bereich des Reaktionsfeldes angewendet wurde, die thermoakustische Instabilität unterdrückt wurde (siehe Fig. 2). Diese Steuerungsmethode bzw. Regelungssmethode ist nur ein Beispiel für die Regelungsstrategie. Jede andere Regelungs- bzw. Steuermethodik, die die Strömungsdynamik an der kritischen Stelle ausreichend verändert, kann in einem alternativen Szenario auch für die Regelung bzw. verwendet werden. Ferner kann für eine andere Regelungsmethodik auch ein anderes Netzwerkmaß verwendet werden, um die Regelungs- bzw. Steuerungsstrategie zu optimieren.

Die Netzwerkmaße werden also bevorzugt benutzt, um die kritische Region in der reaktiven Strömung zu identifizieren. In Abb. 1 ist, wie besprochen, ein Ausschnitt einer Brennkammer für verschiedene Zustände der Verbrennung dargestellt: Verbrennungsrauschen ("combustion noise") als wünschenswerten Zustand, Intermittenz und thermoakustische Instabilität. Die Verbrennung sollte hauptsächlich in der rechten Hälfte (vorderer Bereich) der Kammer stattfinden. Während der thermoakustischen Instabilität tritt eine Region besonders hervor, in der der Closeness-Koeffizient hoch ist (markiert mit schwarzer bzw. weißer Box). Innerhalb dieser schwarzen bzw. weißen Box findet sich eine linienhafte Struktur höherer Betweenness-Werte, was auf eine Auftrennung des Verbrennungsvorganges im hinteren (im Bild linken) und vorderen Teil der Brennkammer hinweist. Hohe Netzwerk-Grad Werte im hinteren Teil der Brennkammer deuten ebenfalls auf geänderte Dynamik im Verbrennungsprozess hin, im Gegensatz zu hohen Netzwerk-Grad Werten im vorderen Teil der Brennkammer während Verbrennungsrauschen und Intermittenz. Die Region mit dem erhöhten Closeness-Koeffizienten (schwarze bzw. weiße box) ist offenbar eine Schlüsselregion, um den reaktiven Strömungsvorgang zu kontrollieren.

FIGUR 2: a. (die beiden oberen Abbildungen auf der linken Seite) zeigen Druckschwingungen und entsprechendes Leistungsspektrum, wenn keine Regelung erfolgt. Des Weiteren ist gezeigt: Druckschwingungen und entsprechendes Leistungsspektrum, wenn b. (die beiden oberen Abbildungen rechts) ein Luftstrahl von 25 Standard-Litern pro Minute (SLPM) injiziert wird an den Punkten X, c. (die beiden unteren linken Abbildungen) Y, d. (die beiden unteren rechten Abbildungen) Z (X, Y, und Z wie in Fig. 1 dargestellt. Die Strömungsrate der reaktiven Strömung (bevorzugt des Fluides) beträgt 700 SLPM. Wenn keine Kontrolle angewendet wird, wird eine thermoakustische Instabilität beobachtet. Die größte Verringerung der Amplitude der thermoakustischen Instabilität wird beobachtet, wenn der Luftstrahl an der Stelle Z injiziert wird, die als kritischste Stelle aus der Netzwerkanalyse identifiziert wird.

Wie besprochen zeigt Abbildung 2 die Veränderungen des Drucks in der Brennkammer und zugehörige Powerspektren während thermoakustischer Instabilität: (a) ohne Unterdrückung, (b) micro-jet an Position X, (c) micro-jet an Position Y und (d) micro-jet an Position Z. In (a) weisen die deutlichen Peaks im Powerspektrum auf die Instabilität hin; in (d) ist die Amplitude des Drucks deutlich reduziert und die Peaks im Powerspektrum sind deutlich flacher, was die erfolgreiche Unterdrückung der Instabilität bestätigt.

Beispiel 4 - System zur Optimierung der passiven und aktiven Steuerung von Grenzzyklusschwingungen

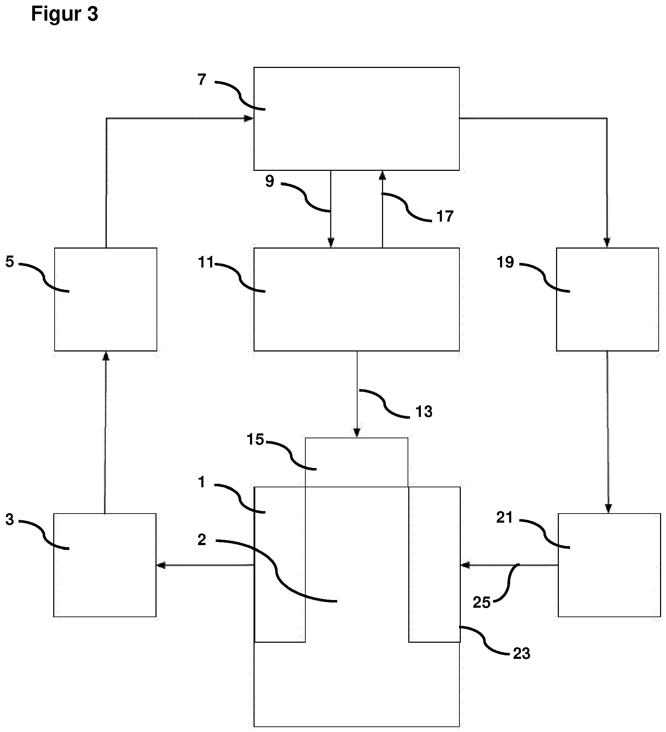

Ein System zum Optimieren der passiven und aktiven Steuerung von Grenzzyklusoszillationen ist in Fig. 3 dargestellt. Sie kann einen Analog-Digital- Wandler (A/D-Wandler), einen Digital-AnalogWandler (D/A-Wandler), einen Steuerungsoptimierer, eine Verarbeitungseinheit oder einen numerischen Simulator, einen passiven Controller, einen Sensor und einen Aktuator umfassen.

FIGUR 3 zeigt Blockschaltbild, das das prototypische System **2,** bspw. eine Gasturbine, darstellt, das zur Optimierung der passiven und aktiven Steuerung von Grenzzyklusoszillationen verwendet wird, die in der vorliegenden Erfindung verwendet werden.

Das System **2** kann hier das physische System sein, auf das die Steuerungs- bzw. Regelungsaktion angewendet wird, und/oder eine Simulation des physischen Systems. Das Signal kann räumliche Daten oder räumlich-zeitliche Daten einer einzelnen Systemvariablen oder mehrerer Systemvariablen umfassen. Das Signal kann unter Verwendung eines Sensors **1** erhalten werden. Mit dem Signalaufbereiter **3** werden die Signale des Systems bevorzugt aufbereitet. Ein A/D-Wandler **5** wandelt bevorzugt die analogen Signale des Systems in digitale Signale um. Das digitalisierte Signal wird dann in der Verarbeitungseinheit/im numerischen Simulator **7** verarbeitet. Die Verarbeitung kann die Organisation von Daten, das Filtern von Daten, die Extrapolation von Daten usw. umfassen. Das verarbeitete Signal **9** wird dann in einen Steuerungsoptimierer **11** eingegeben. Der Steuerungsoptimierer **11** optimiert dann die Steuerstrategie, wie in der gegebenen Ausführungsform erläutert, durch Netzwerkanalyse. Im Falle einer passiven Steuerung gibt der Steuerungsoptimierer **11** Vorschläge zur Optimierung der Steuerungsstrategie, insbesondere die Festlegung geeigneter Bereiche für eine kontrollierte Störung. Verarbeitungseinheit/ numerischer Simulator **7** und/oder Steuerungsoptimierer **11** können eine Recheneinheit umfassen. Im Falle einer aktiven Steuerung gibt der Optimierer **11** seine Vorschläge **17** an eine Verarbeitungseinheit/den numerischen Simulator **7,** wo die erforderlichen Steuersignale für eine aktive Steuerung der Störung im laufenden Betrieb erzeugt werden. Das Steuersignal geht durch einen D/A-Wandler **19** und erreicht die Steuerung **21,** die wiederum den Aktuator bzw. das Kontrollelement **23** verwendet und durch Steuersignale **25** ansteuert, um die Steuerung im System **2** zu implementieren.

Bezugszeichenliste:

1     Sensor
2     System
3     Signalaufbereiter
5     A/D-Wandler
7     Simulator

9    verarbeitetes Signal
11   Steuerungsoptimierer
15   passive Steuerung
17   Vorschläge des Optimierers
19   D/A-Wandler
21   Steuerung
23   Aktuator/Kontrollelement
25   Steuersignal

**Patentansprüche**

1.  Computerimplementiertes Verfahren für eine Minimierung von thermoakustischen, aeroakustischen und/oder aeroelastischen Instabilitätszuständen eines Verbrennungsvorgangs in einer Gasturbine, wobei die Gasturbine ein Verbrennungsvolumen umfassend ein Fluid aufweist,
    wobei die folgenden Schritte umfasst sind:

    - Erzeugung einer digitalen Abbildung des Verbrennungsvolumens in Form eines Gitters durch räumliche Aufteilung des Verbrennungsvolumens in Volumenbereiche und digitale Abbildung dieser Volumenbereiche durch Gitterzellen;
    - Erzeugung einer Zeitreihe mindestens einer Zustandsvariablen des pro Volumenbereich umfassten Fluides während eines Verbrennungsvorgangs, durch digitale Simulation des Verbrennungsvorgangs und/oder Messung der Zustandsvariablen während des Verbrennungsvorgangs durch mindestens einen Sensor (1)
    - Zuordnung der Zeitreihe zur jeweiligen Gitterzelle ;
    - Bildung eines räumlichen und/oder zeitlichen Netzwerks, indem jede Gitterzelle durch einen Knoten repräsentiert wird und bezüglich der Zeitreihen korrelierte Paare von Knoten durch einen Link verbunden werden;
    - Durchführung einer Netzwerkanalyse zu einer Bestimmung von mindestens einem statistischen Netzwerkmaß des Netzwerks,
    - Durchführung einer Analyse des Netzwerkmaßes

    wobei die Analyse des Netzwerkmaßes konfiguriert ist für eine Minimierung von thermoakustischen, aeroakustischen und/oder aeroelastischen Instabilitätszuständen eines Verbrennungsvorgangs durch eine kontrollierte Störung des Verbrennungsvorgangs durch mindestens ein Kontrollelement (23).

2.  Computerimplementiertes Verfahren nach Anspruch 1,
    **dadurch gekennzeichnet, dass**

    für jedes Paar von Knoten ein Korrelationskoeffizient der jeweiligen Zeitreihen gebildet wird und ein Paar von Knoten ein korreliertes Paar ist, wenn der Korrelationskoeffizient einen Schwellwert überschreitet, wobei der Schwellwert bevorzugt mindestens dem 25% Quantil aller gebildeten Korrelationskoeffizienten entspricht.

3.  Computerimplementiertes Verfahren nach einem oder mehreren der vorherigen Ansprüche, **dadurch gekennzeichnet, dass**
    die Zustandsvariable ausgesucht ist aus der Gruppe umfassend lokale Reaktionsrate, Mischungsverhältnis, Geschwindigkeit, Druck, Druckgradient, Temperatur und/oder Wirbel stärke.

4.  Computerimplementiertes Verfahren nach einem oder mehreren der vorherigen Ansprüche, **dadurch gekennzeichnet, dass**
    die Minimierung von thermoakustischen Instabilitätszuständen eines Verbrennungsvorgangs durch eine kontrollierte Störung des Verbrennungsvorgangs eine Festlegung mindestens eines geeigneten Bereichs des Verbrennungsvolumens für eine kontrollierte Störung des Verbrennungsvorgangs und/oder eine Detektion eines Verbrennungszustands umfasst, wobei der Verbrennungszustand bevorzugt ausgesucht ist aus der Gruppe umfassend Verbrennungsrauschen, Intermittenz und/oder thermoakustische Instabilität.

5.  Computerimplementiertes Verfahren nach dem vorherigen Anspruch,
    **dadurch gekennzeichnet, dass**
    die Analyse des Netzwerkmaßes eine Bestimmung mindestens eines geeigneten Netzwerkmaßes für die Festlegung des geeigneten Bereichs des Verbrennungsvolumens für eine kontrollierte Störung des Verbrennungsvorgangs und/oder die Detektion eines Verbrennungszustands umfasst.

6. Computerimplementiertes Verfahren nach dem vorherigen Anspruch, **dadurch gekennzeichnet, dass** die Bestimmung mindestens eines geeigneten Netzwerkmaßes eine Betrachtung von Schwellwerten und/oder Extremwerten des Netzwerkmaßes bei verschiedenen Verbrennungszuständen umfasst.

7. Computerimplementiertes Verfahren nach einem oder mehreren der vorherigen Ansprüche, **dadurch gekennzeichnet, dass** das Netzwerkmaß ausgesucht ist aus der Gruppe umfassend Netzwerk-Grad, Cluster-Koeffizient, Betweenness-Koeffizient und/oder Closeness-Koeffizient und/oder eine Detektion der Intermittenz und/oder der thermoakustischen Instabilität die Bestimmung des Closeness-Koeffizienten oberhalb eines Schwellwerts umfasst und die Festlegung eines geeigneten Bereichs des Verbrennungsvolumens für eine kontrollierte Störung des Verbrennungsvorgangs die Bestimmung des Maximalwerts des Closeness-Koeffizienten oberhalb des Schwellwerts umfasst.

8. Computerimplementiertes Verfahren nach einem oder mehreren der vorherigen Ansprüche, **dadurch gekennzeichnet, dass** die Detektion eines Verbrennungszustands durch Analyse des Netzwerkmaßes die Festlegung eines kritischen Werts und/oder eines kritischen Zeitreihenverlaufs von mindestens einer Zustandsvariablen in mindestens einem Volumenbereich umfasst, wobei die Minimierung von thermoakustischen Instabilitätszuständen eines Verbrennungsvorgangs durch eine kontrollierte Störung des Verbrennungsvorgangs bevorzugt folgende Schritte umfasst:

   - Messung der Zustandsvariablen durch den Sensor (1);
   - Detektion des Verbrennungszustands durch Vergleich der gemessenen Zustandsvariablen mit dem kritischen Wert und/oder dem kritischen Zeitreihenverlauf der Zustandsvariablen;
   - Kontrollierte Störung des Verbrennungsvorgangs durch das mindestens eine Kontrollelement (23) in mindestens einem geeigneten Bereich bei Detektion einer Intermittenz und/oder einer thermischen Instabilität.

9. Computerimplementiertes Verfahren nach einem oder mehreren der vorherigen Ansprüche, **dadurch gekennzeichnet, dass** das Kontrollelement (23) ausgesucht ist aus der Gruppe umfassend eine Einspritzvorrichtung (Micro-Jet) eines Fluides, Schalldämpfungselement, Resonator und/oder veränderbare Einspritzvorrichtung für Treibstoff.

10. Computerimplementiertes Verfahren nach einem oder mehreren der vorherigen Ansprüche, **dadurch gekennzeichnet, dass**

   die Messung eine Messung der Geschwindigkeit, der lokalen Wärmeabgabe, der Reaktionsrate und/oder des Temperaturfelds ist und ausgesucht ist aus der Gruppe umfassend thermischen Anemometrie, Staudruckmessung, Blendenmessung, Laser-Doppler-Anemometrie, Particle Image Velocimetry (PIV), Magnetic Resonance Velocimetry (MRV), Particle Tracking Velocimetry (PTV), Doppler Global Velocimetry (GDV), Laser-Zwei-Fokus (L2F), optische Messung durch Ortsfilter, Temperaturmessung, Spektroskopie, Photometrie und/oder der Sensor (1) ausgesucht ist aus der Gruppe umfassend Hitzdraht, Staurohr, Messblende, Laser und Empfangsoptik, PIV-Kamera, MRT Gerät, CCD Sensor, Heißleiter, Kaltleiter, Halbleiter-Temperatursensoren, Transistor, Temperaturfühler mit Schwingquarz, Thermoelement, Infrarot-Sensor, Pyrometer, Wärmebildkamera, Bimetallschalter, Magnetschalter, optischer Temperatursensor Spektrometer und/oder Photometer.

11. Computerimplementiertes Verfahren nach einem oder mehreren der vorherigen Ansprüche, **dadurch gekennzeichnet, dass** die Minimierung von thermoakustischen, aeroakustischen und/oder aeroelastischen Instabilitätszuständen eines Verbrennungsvorgangs durch eine kontrollierte Störung des Verbrennungsvorgangs eine Regulation einer kontrollierten Störung des Verbrennungsvorgangs durch einen Regelkreislauf mit einer Rückkopplungsschleife umfasst.

12. Verwendung eines Computerimplementierten Verfahrens nach einem oder mehreren der vorherigen Ansprüche zur Minimierung von thermoakustischen, aeroakustischen und/oder aeroelastischen Instabilitätszuständen, vorzugsweise bei einem Verbrennungsvorgang in einer Gasturbine.

13. Vorrichtung für eine Gasturbine umfassend eine Regeleinheit zur Minimierung von thermoakustischen Instabilitätszuständen bei einem Verbrennungsvorgang in einer Gasturbine, aufweisend ein Verbrennungsvolumen umfassend ein Fluid, wobei die Vorrichtung die folgenden Elemente umfasst:

- mindestens einen Sensor (1);
- mindestens einen Regelungscomputer sowie
- mindestens ein Kontrollelement (23);

wobei Sensor (1) und Regelcomputer konfiguriert sind für eine Minimierung von thermoakustischen Instabilitätszuständen eines Verbrennungsvorgangs durch eine kontrollierte Störung des Verbrennungsvorgangs durch ein Kontrollelement (23), umfassend die folgenden Schritte:

- Durchführung eines Verfahrens nach einem oder mehreren der vorherigen Ansprüche 4 - 11 zur Festlegung geeigneter Bereiche des Verbrennungsvolumens für eine kontrollierte Störung des Verbrennungsvorgangs und zur Detektion eines Verbrennungszustands;
- Messung einer Zustandsvariablen durch den Sensor (1)
- Kontrollierte Störung des Verbrennungsvorgangs durch das Kontrollelement (23) im geeigneten Bereich, bei Detektion einer Intermittenz und/oder einer thermischen Instabilität durch den Regelcomputer.

**14.** Computerprogramm umfassend einen Algorithmus zur Ausführung der Verfahrensschritte nach einem oder mehreren der Ansprüche 1-11.

**15.** Computerlesbares Medium zu Speicherung des Computerprogramms nach Anspruch 14.

**Claims**

**1.** A computer-implemented method for minimising thermoacoustic, aeroacoustic, and/or aeroelastic instability states of a combustion process in a gas turbine, wherein the gas turbine has a combustion volume comprising a fluid, comprising the following steps:

- generation of a digital image of the combustion volume in the form of a grid by spatially dividing the combustion volume into volume regions and digitally mapping these volume regions by grid cells;
- generation of a time series of at least one state variable of the fluid comprised per volume range during a combustion process, by digital simulation of the combustion process and/or measurement of the state variable during the combustion process by at least one sensor (1);
- assignment of the time series to the respective grid cell;
- formation of a spatial and/or temporal network by representing each grid cell by a node and connecting pairs of nodes correlated with respect to the time series by a link;
- performing a network analysis to determine at least one statistical network measure of the network,
- performing a network measure analysis, wherein the network measure analysis is configured for minimising thermoacoustic, aeroacoustic and/or aeroelastic instability states of a combustion process by a controlled disturbance of the combustion process by at least one control element (23).

**2.** The computer-implemented method according to claim 1, **characterised in that**
a correlation coefficient of the respective time series is formed for each pair of nodes and a pair of nodes is a correlated pair if the correlation coefficient exceeds a threshold value, wherein the threshold value preferably corresponds to at least the 25% quantile of all formed correlation coefficients.

**3.** The computer-implemented method according to any one or several of the preceding claims, **characterised in that**
the state variable is selected from the group comprising local response rate, mixing ratio, velocity, pressure, pressure gradient, temperature, and/or vorticity.

**4.** The computer-implemented method according to any one or several of the preceding claims, **characterised in that**
minimising thermoacoustic instability states of a combustion process by a controlled disturbance of the combustion process comprises a determination of at least one suitable range of the combustion volume for a controlled disturbance of the combustion process and/or a detection of a combustion state, wherein the combustion state is preferably selected from the group comprising combustion noise, intermittence, and/or thermoacoustic instability.

**5.** The computer-implemented method according to the preceding claim,
**characterised in that**
the analysis of the network measure comprises a determination of at least one suitable network measure for the determination of the suitable range of the combustion volume for a controlled disturbance of the combustion process and/or the detection of a combustion state.

**6.** The computer-implemented method according to the preceding claim,
**characterised in that**
the determination of at least one suitable network measure comprises a consideration of threshold values and/or extreme values of the network measure at different combustion states.

**7.** The computer-implemented method according to any one or several of the preceding claims,
**characterised in that**
the network measure is selected from the group comprising network degree, cluster coefficient, betweenness coefficient and/or closeness coefficient, and/or a detection of intermittency and/or thermoacoustic instability comprises the determination of the closeness coefficient above a threshold value, and the determination of an appropriate range of the combustion volume for a controlled disturbance of the combustion process comprises the determination of the maximum value of the closeness coefficient above the threshold value.

**8.** The computer-implemented method according to any one or several of the preceding claims,
**characterised in that**
the detection of a combustion state by analysis of the network measure comprises the determination of a critical value and/or a critical time series history of at least one state variable in at least one volume range, wherein the minimisation of thermoacoustic instability states of a combustion process by a controlled disturbance of the combustion process preferably comprises the following steps:

- measurement of the state variable by the sensor (1);
- detection of the combustion state by comparing the measured state variable to the critical value and/or the critical time series history of the state variable;
- controlled disturbance of the combustion process by the at least one control element (23) in at least one suitable area upon detection of an intermittency and/or a thermal instability.

**9.** The computer-implemented method according to any one or several of the preceding claims,
**characterised in that**
the control element (23) is selected from the group comprising an injection device (micro jet) of a fluid, a sound damping element, a resonator and/or modifiable injection device for fuel.

**10.** The computer-implemented method according to any one or several of the preceding claims,
**characterised in that**
the measurement is a measurement of velocity, local heat release, response rate and/or temperature field and is selected from the group comprising thermal anemometry, dynamic pressure measurement, aperture measurement, laser Doppler anemometry, particle image velocimetry (PIV), magnetic resonance velocimetry (MRV), particle tracking velocimetry (PTV), Doppler global velocimetry (DGV), laser two-focus (L2F), optical measurement by spatial filters, temperature measurement, spectroscopy, photometry, and/or the sensor (1) is selected from the group comprising hot wire, pitot tube, measuring aperture, laser and receiving optics, PIV camera, MRI device, CCD sensor, hot conductor, cold conductor, semiconductor temperature sensors, transistor, temperature sensor with oscillating quartz, thermocouple, infrared sensor, pyrometer, thermal imaging camera, bimetal switch, magnetic switch, optical temperature sensor, spectrometer and/or photometer.

**11.** The computer-implemented method according to any one or several of the preceding claims,
**characterised in that**
minimising thermoacoustic, aeroacoustic and/or aeroelastic instability states of a combustion process by a controlled disturbance of the combustion process comprises a regulation of a controlled disturbance of the combustion process by a control loop with a feedback loop.

**12.** A use of a computer-implemented method according to any one or more of the preceding claims for minimising thermoacoustic, aeroacoustic and/or aeroelastic instability conditions, preferably in a combustion process in a gas turbine.

**13.** A device for a gas turbine comprising a control unit for minimising thermoacoustic instability conditions in a combustion process in a gas turbine having a combustion volume comprising a fluid, wherein the device comprises the following elements:

- at least one sensor (1);
- at least one control computer and
- at least one control element (23);

wherein the sensor (1) and control computer are configured for minimising thermoacoustic instability conditions of a combustion process by a controlled disturbance of the combustion process by a control element (23), comprising the following steps:

- carrying out a method according to any one or more of the preceding claims 4 - 11 for determining suitable areas of the combustion volume for a controlled disturbance of the combustion process and for detecting a combustion state;
- measurement of a state variable by the sensor (1);
- controlled disturbance of the combustion process by the control element (23) in the suitable area upon detection of an intermittency and/or a thermal instability by the control computer.

**14.** A computer program comprising an algorithm for performing the method steps according to any one or several of claims 1-11.

**15.** A computer readable medium for storing the computer program of claim 14.

**Revendications**

**1.** Procédé implémenté de manière informatique pour minimaliser des états d'instabilité thermoacoustique, aéroacoustique et/ou aéroélastique d'une opération de combustion dans une turbine à gaz, dans lequel la turbine à gaz présente un volume de combustion comprenant un fluide,
dans lequel le procédé comprend les étapes suivantes :

- génération d'une reproduction numérique du volume de combustion sous la forme d'une grille par une répartition spatiale du volume de combustion en zones de volume et reproduction numérique desdites zones de volume par des cellules de grille ;
- génération d'une série chronologique d'au moins une variable d'état du fluide compris par zone de volume pendant une opération de combustion, par une simulation numérique de l'opération de combustion et/ou par une mesure des variables d'état pendant l'opération de combustion par au moins un capteur (1)
- association de la série chronologique à la cellule de grille respective ;
- formation d'un réseau spatial et/ou temporel en ce que chaque cellule de grille est représentée par un nœud et que des paires de nœuds en corrélation par rapport aux séries chronologiques sont reliées par un lien ;
- réalisation d'une analyse de réseau pour déterminer au moins une mesure statistique du réseau,
- réalisation d'une analyse de la mesure de réseau

dans lequel l'analyse de la mesure de réseau est configurée pour minimaliser des états d'instabilité thermoacoustique, aéroacoustique et/ou aéroélastique d'une opération de combustion par un contrôle de la défaillance de l'opération de combustion par au moins un élément de contrôle (23).

**2.** Procédé implémenté de manière informatique selon la revendication 1,
**caractérisé en ce**

**qu'**un coefficient de corrélation de la série chronologique respective est formé pour chaque paire de nœuds et une paire de nœuds est une paire en corrélation si le coefficient de corrélation dépasse une valeur seuil, dans lequel
la valeur seuil correspond de préférence au moins au quantile à 25 % de tous les coefficients de corrélation formés.

**3.** Procédé implémenté de manière informatique selon une ou plusieurs des revendications précédentes, **caractérisé**

en ce que
la variable d'état est choisie dans le groupe comprenant la vitesse de réaction locale, le rapport de mélange, la vitesse, la pression, le gradient de pression, la température et/ou la force de tourbillonnement.

4. Procédé implémenté de manière informatique selon une ou plusieurs des revendications précédentes, **caractérisé en ce que**
la minimalisation des états d'instabilité thermoacoustique d'une opération de combustion par un contrôle de la défaillance de l'opération de combustion comprend une définition d'au moins une zone appropriée du volume de combustion pour un contrôle de la défaillance de l'opération de combustion et/ou une détection d'un état de combustion, dans lequel l'état de combustion est de préférence choisi dans le groupe comprenant les bruits de combustion, l'intermittence et/ou l'instabilité thermoacoustique.

5. Procédé implémenté de manière informatique selon la revendication précédente,
**caractérisé en ce que**
l'analyse de la mesure de réseau comprend une détermination d'au moins une mesure de réseau appropriée pour définir la zone appropriée du volume de combustion pour un contrôle de la défaillance de l'opération de combustion et/ou la détection d'un état de combustion.

6. Procédé implémenté de manière informatique selon la revendication précédente,
**caractérisé en ce que**
la détermination d'au moins une mesure de réseau appropriée comprend la prise en compte de valeurs seuils et/ou de valeurs extrêmes de la mesure de réseau pour différents états de combustion.

7. Procédé implémenté de manière informatique selon une ou plusieurs des revendications précédentes, **caractérisé en ce que**

la mesure de réseau est choisie dans le groupe comprenant le degré de réseau, le coefficient de cluster, le coefficient d'intermédiarité et/ou le coefficient de proximité et/ou
une détection de l'intermittence et/ou de l'instabilité thermoacoustique comprend la détermination du coefficient de proximité au-dessus d'une valeur seuil et la définition d'une zone appropriée du volume de combustion pour un contrôle de la défaillance de l'opération de combustion comprend la détermination de la valeur maximale du coefficient de proximité au-dessus de la valeur seuil.

8. Procédé implémenté de manière informatique selon une ou plusieurs des revendications précédentes, **caractérisé en ce que**
la détection d'un état de combustion par l'analyse de la mesure de réseau comprend la définition d'une valeur critique et/ou d'une courbe de série chronologique critique d'au moins une variable d'état dans au moins une zone de volume, dans lequel la minimalisation des états d'instabilité thermoacoustique d'une opération de combustion par un contrôle de la défaillance de l'opération de combustion comprend de préférence les étapes suivantes :

- mesure des variables d'état par le capteur (1) ;
- détection de l'état de combustion par comparaison des variables d'état mesurées avec la valeur critique et/ou la courbe de série chronologique critique des variables d'état ;
- contrôle de la défaillance de l'opération de combustion par l'au moins un élément de contrôle (23) dans au moins une zone appropriée lors de la détection d'une intermittence et/ou d'une instabilité thermique.

9. Procédé implémenté de manière informatique selon une ou plusieurs des revendications précédentes, **caractérisé en ce que**
l'élément de contrôle (23) est choisi dans le groupe comprenant un dispositif d'injection (micro-jet) d'un fluide, un élément insonorisant, un résonateur et/ou un dispositif d'injection variable de carburant.

10. Procédé implémenté de manière informatique selon une ou plusieurs des revendications précédentes, **caractérisé en ce que**

la mesure est une mesure de la vitesse, du dégagement local de chaleur, de la vitesse de réaction et/ou du champ de température et est choisie dans le groupe comprenant l'anémométrie thermique, la mesure de pression dynamique, la mesure d'ouverture, l'anémométrie laser à effet Doppler, la vélocimétrie par image de particules (PIV), la vélocimétrie par résonance magnétique (MRV), la vélocimétrie par suivi de particules (PTV), la vélocimétrie globale à effet Doppler (GDV), le laser à deux foyers (L2F), la mesure optique par filtres spatiaux, la mesure de température, la spectroscopie, la photométrie et/ou

le capteur (1) est choisi dans le groupe comprenant un fil chaud, un tube de Pitot, un diaphragme de mesure, un laser et un système optique de réception, une caméra PIV, un appareil IRM, un capteur CCD, une thermistance NTC, une thermistance PTC, des capteurs de température à semi-conducteur, un transistor, un capteur de température à quartz oscillateur, un thermocouple, un capteur infrarouge, un pyromètre, une caméra thermique, un commutateur bimétallique, un commutateur magnétique, un capteur optique de température, un spectromètre et/ou un photomètre.

11. Procédé implémenté de manière informatique selon une ou plusieurs des revendications précédentes, **caractérisé en ce que**

la minimalisation des états d'instabilité thermoacoustique, aéroacoustique et/ou aéroélastique d'une opération de combustion par un contrôle de la défaillance de l'opération de combustion comprend une régulation d'un contrôle de la défaillance de l'opération de combustion par un circuit de régulation au moyen d'une boucle de rétroaction.

12. Utilisation d'un procédé implémenté de manière informatique selon une ou plusieurs des revendications précédentes pour minimaliser les états d'instabilité thermoacoustique, aéroacoustique et/ou aéroélastique, de préférence pendant une opération de combustion dans une turbine à gaz.

13. Dispositif pour turbine à gaz comprenant une unité de régulation pour minimaliser les états d'instabilité thermoacoustique pendant une opération de combustion dans une turbine à gaz, présentant un volume de combustion comprenant un fluide, dans lequel le dispositif comprend les éléments suivants :

- au moins un capteur (1) ;
- au moins un ordinateur de régulation ainsi que
- au moins un élément de contrôle (23) ;

dans lequel

le capteur (1) et l'ordinateur de régulation sont configurés pour minimaliser des états d'instabilité thermoacoustique d'une opération de combustion par un contrôle de la défaillance de l'opération de combustion par un élément de contrôle (23), comprenant les étapes suivantes :

- mise en œuvre d'un procédé selon l'une ou plusieurs des revendications précédentes 4 à 11 pour définir des zones appropriées du volume de combustion pour un contrôle de la défaillance de l'opération de combustion et pour détecter un état de combustion ;
- mesure d'une variable d'état par le capteur (1)
- contrôle de la défaillance de l'opération de combustion par l'élément de contrôle (23) dans la zone appropriée lors de la détection d'une intermittence et/ou d'une instabilité thermique par l'ordinateur de régulation.

14. Programme informatique comprenant un algorithme pour exécuter les étapes du procédé selon une ou plusieurs des revendications 1 à 11.

15. Support lisible par ordinateur pour stocker le programme informatique selon la revendication 14.

**Figur 1**

# Figur 2

**Figur 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017051683 A1
- WO 2010036285 A1